(19) **Europäisches Patentamt / European Patent Office / Office européen des brevets**

(11) **EP 4 756 948 A1**

(12) **EUROPEAN PATENT APPLICATION**
published in accordance with Art. 153(4) EPC

(43) Date of publication:
**10.06.2026 Bulletin 2026/24**

(21) Application number: **24886279.9**

(22) Date of filing: **31.10.2024**

(51) International Patent Classification (IPC):
**H01M 10/04** (2006.01)  **H01M 10/44** (2006.01)
**H01M 10/42** (2006.01)  **H01M 10/0585** (2010.01)
**H01M 4/04** (2006.01)

(52) Cooperative Patent Classification (CPC):
**H01M 4/04; H01M 4/38; H01M 4/505; H01M 4/525;
H01M 10/04; H01M 10/0562; H01M 10/058;
H01M 10/0585; H01M 10/42; H01M 10/44;
Y02E 60/10; Y02P 70/50**

(86) International application number:
**PCT/KR2024/016884**

(87) International publication number:
**WO 2025/095607 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.10.2023  US 202363546685 P
08.11.2023  US 202363547809 P
29.10.2024  US 202418930823
29.10.2024  US 202418930862
30.10.2024  KR 20240151089**

(71) Applicants:
• **LG Energy Solution, Ltd.
Seoul 07335 (KR)**

• **The Regents of the University of California
Oakland, CA 94607-5200 (US)**

(72) Inventors:
• **LEE, Jeongbeom
Daejeon 34122 (KR)**
• **SONG, Min Sang
Daejeon 34122 (KR)**
• **CHEN, Yu-Ting
La Jolla, California  92092 (US)**
• **MENG, Ying Shirley
San Diego, California 92109 (US)**

(74) Representative: **Goddar, Heinz J.
Boehmert & Boehmert
Anwaltspartnerschaft mbB
Pettenkoferstrasse 22
80336 München (DE)**

(54) **BATTERY CELL PRESSURIZATION DEVICE, BATTERY CELL PRESSURIZATION SYSTEM, AND BATTERY PACK INCLUDING SAME**

(57)   A battery cell pressing system may include a sealed case having an internal chamber, the sealed case including at least one window to allow visual inspection of the internal chamber; a pouch-type battery cell disposed within the internal chamber of the sealed case; a fluid filling the internal chamber and surrounding the pouch-type battery cell; a fluid entrance in fluid communication with the internal chamber; a pressing member configured to adjust a pressure of the fluid within the internal chamber such that the pressure at which the fluid presses the pouch-type battery cell is approximately 1 MPa to 10 MPa; a heater configured to heat the fluid within the internal chamber; and a pressure measuring member configured to measure the pressure within the internal chamber. The fluid isotropically presses the pouch-type battery cell during at least one of charging and discharging of the pouch-type battery cell.

**FIG. 1**

**Description**

<u>FIELD</u>

<u>CROSS-REFERENCE TO RELATED APPLICATIONS</u>

This Application claims priority to U.S. Provisional Application No. 63/546,685, filed on October 31, 2023, U.S. Provisional Application No. 63/547,809, filed on November 8, 2023, U.S. Non-Provisional Application No. 18/930,823, filed on October 29, 2024, U.S. Non-Provisional Application No. 18/930,862, filed on October 29, 2024, and Korean Patent Application No. 10-2024-0151089, filed October 30, 2024, the entire contents of all these applications being hereby expressly incorporated by reference into the present application.

<u>Field</u>

The present disclosure relates to a battery cell pressing device, a battery cell pressing system and a battery pack comprising the same.

<u>BACKGROUND</u>

In light of technological advancements and the surging demand for portable power for portable devices, rechargeable secondary batteries have been widely adopted as primary energy sources for a diverse range of portable devices. Furthermore, secondary batteries have garnered significant interest as power sources for electric vehicles, hybrid vehicles, plug-in hybrid vehicles, urban air mobility (UAM) vehicles, and similar innovations, aimed at mitigating air pollution and other climate impacts of existing gasoline or diesel vehicles.

Secondary batteries are typically categorized based on their shape (e.g., form factor). Example battery form factors categories can include coin-type batteries, cylindrical batteries, prismatic batteries, pouch-type batteries, among others. Notably, pouch-type batteries, among these form factors, are characterized by their construction, which combines a metal layer (foil) with an outer pouch made of a multilayer film comprising a synthetic resin layer coated on both upper and lower surfaces of the metal layer. This unique design results in Pouch-type batteries that not only exhibit a significant reduction in weight when compared to cylindrical or prismatic batteries, but their flexible shape further allows them to assume diverse shape, making them particularly attractive for various applications.

The manufacturing of pouch-type batteries typically involves a battery cell activation process that takes place after battery assembly. This activation process typically entails employing a fixture (e.g., a jig or the like) to press the battery cell, and then charging and discharging the battery cell by applying current to the battery cell up to a predetermined voltage. The necessity of this activation process lies in its role inactivating the cathode active material during the initial cycle and facilitating the formation of a stable surface film, commonly known as the Solid Electrolyte Interface (SEI) layer, on the anode.

For batteries employing anodes with substantial volume fluctuations, such as silicon and lithium metal, achieving excellent performance can require precise application of uniform pressure during the battery cell pressing phase of the activation process. The use of non-uniform pressure on the battery cell during the activation process can be not only degrade battery performance, but can also detrimentally impact the lifespan of the battery.

Therefore, there is a need for a battery cell pressing device that can consistently apply uniform pressure to optimize battery performance.

[Background Art Document]

Korean Laid-open Patent Publication No. 10-2019-0072289 published June 25, 2019.

<u>SUMMARY OF THE DISCLOSURE</u>

<u>Technical Problems</u>

It is one object of the present disclosure to provide a battery cell pressing device capable of applying a uniform driving pressure to a battery cell and a battery pack comprising the same.

It is another object of the present disclosure to provide a battery cell pressing device capable of preventing or reducing deterioration in performance and lifetime of a battery cell during charging/discharging of the battery cell, and a battery pack comprising the same.

## Technical Solution

In one aspect, the present disclosure provides a battery cell pressing device, including: a case in which a battery cell is disposed inside the case; and a fluid filling the inside of the case and pressing the battery cell, wherein the fluid isotropically presses the battery cell during at least one of charging and discharging of the battery cell.

In another aspect, the present disclosure provides a battery pack including the battery cell pressing device.

Effect of InventionThe present disclosure can provide a battery cell pressing device capable of isotropically pressing a battery cell and a battery pack including the same.

In addition, the present disclosure can provide a battery cell pressing device capable of preventing deterioration in performance and lifetime of a battery cell during charging/discharging of the battery cell, and a battery pack including the same.

## BRIEF DESCRIPTION OF THE DRAWINGS

FIG. 1 illustrates a perspective view of a battery cell pressing device according to an aspect of the present disclosure.

FIG. 2 is a diagram illustrating voltage curves after a cycle of a battery cell using a battery cell pressing device according to an aspect of the present disclosure or a battery cell pressing device using a static pressure jig.

FIG. 3 is a diagram illustrating the coulombic efficiency of a battery cell using a battery cell pressing device according to an aspect of the present disclosure or a battery cell pressing device using a static pressure jig.

FIG. 4 is a diagram illustrating the discharge capacity of a battery cell using a battery cell pressing device according to an aspect of the present disclosure or a battery cell pressing device using a static pressure jig.

FIG. 5 is a cross sectional view of a battery cell pressing device according to another aspect of the present disclosure.

FIG. 6 shows plots of weight to pressure rating plots of a comparative example and the battery cell pressing device according to aspects of the present disclosure.

FIG. 7 depicts a force distribution of isostatic pressure applied by fluids with the battery cell pressing device according to aspects of the present disclosure.

FIG. 8 shows structures of various uniaxial pouch cell holders (UPCHs) compared to structures of an isostatic pouch cell holder (IPCH) according to aspects of the present disclosure.

FIG. 9 shows a bare UPCH and an improved UPCH with springs and rubber gaskets according to aspects of the present disclosure.

FIG. 10 shows images of pressure paper according to aspects of the present disclosure.

FIG. 11 shows details of the pressure distribution on respective pressure paper, side profiles of cells, voltage profiles and reversible discharge capacity of ASSPCs according to aspects of the present disclosure.

FIG. 12 shows various comparative schematics of cell stacks according to aspects of the present disclosure.

FIG. 13 shows graphs showing cycling pressure characteristic of ASSPCs using IPCH according to aspects of the present disclosure.

FIG. 14 shows Nyquist plots of pouch cells fabricated at 500 MPa and cycled at 5 MPa, 3 MPa and 2 MPa using IPCHs according to aspects of the present disclosure.

FIG. 15 shows graphs of EIS results of ASSPC cycling, capacity retention and CE of pouch cells, average discharge capacity of the pouch cells, and depicts a schematic of evolution of contact loss between SSE and cathode according to aspects of the present disclosure.

FIG. 16 shows a schematic diagram showing a pressurizing process according to aspects of the present disclosure.

FIG. 17 shows an impedance graph of a pouch cell cycled at 5 MPa after 100 cycles according to an aspect of the present disclosure.

FIG. 18 shows a graph of a discharge capacity of an ASSPC cycled at 1 MPa, re-pressurized at 500 MPa and then measured again at 5 MPa according to an aspect of the present disclosure.

FIG. 19 shows a schematic depiction and a plasma focused ion beam scanning electron microscope (P-FIB SEM) cross section of a bilayer pouch cell, a graph of voltage profiles of the pouch cell at different cycle numbers, a graph of capacity retention of a bilayer ASSPC, and a picture of a bilayer ASSPC within an IPCH powering an incandescent light bulb according to aspects of the present disclosure.

FIG. 20 shows graphs of the capacity retention and Coulombic efficiency of pouch cells fabricated using various pressures according to an aspect of the present disclosure.

FIG. 21 shows images of P-FIB cross sections of NCM811 cathode composite calendered at various pressures according to aspects of the present disclosure.

FIG. 22 is a flow chart of a method of using an isostatically pressed cell according to aspects of the present disclosure.

FIG. 23 shows a battery pack according to an aspect of the present disclosure.

FIG. 24 shows a schematic of a solid-state battery according to an aspect of the present disclosure.

## DETAILED DESCRIPTION OF THE EMBODIMENTS

Hereinafter, aspects of the present disclosure will be described in detail with reference to the accompanying drawings. In the drawings, all or part of the configuration can be exaggerated for convenience of description.

In addition, it will be apparent to those skilled in the art that the present disclosure is not limited to the accompanying drawings or the contents described in this specification, and that the present disclosure can be implemented in various forms without departing from the technical spirit of the present disclosure.

The shapes, dimensions, areas, ratios, angles, numbers, and the like, which are illustrated in the drawings to describe various example aspects of the present disclosure, are merely given by way of example. Therefore, the present disclosure is not limited to the illustrations in the drawings. Like reference numerals generally denote like elements throughout the specification, unless otherwise specified. Further, the term "can" fully encompasses all the meanings and coverages of the term "may."

Where a term like "comprise," "have," "include," "contain" , "constitute," "made up of," or "formed of," is used, one or more other elements can be added unless a more limiting term, such as "only" or the like, is used. The terms and names used in the present disclosure are merely used to describe particular aspects, and are not intended to limit the scope of the present disclosure. An element described in the singular form is intended to include a plurality of elements, and vice versa, unless the context clearly indicates otherwise.

In describing the elements of the present disclosure, terms "first," "second," "A," "B," "(a)," "(b)," or the like can be used. These terms are intended to identify the corresponding element(s) from other element(s), and are not used to define the essence, basis, order, sequence, or number of the elements.

Features of various aspects of the present disclosure can be partially or entirely coupled to or combined with each other and can be operated, linked, or driven together in various ways. aspects of the present disclosure can be carried out independently from each other, or can be carried out together in co-dependent or related relationship.

In the activation process of repeatedly charging and discharging the manufactured battery cell to activate the battery and remove the gas, there is a case of pressing the battery cell with a battery cell pressing device including a jig. In addition, after manufacturing the battery cell, there is a case where pressing is required on the battery cell during charging/discharging to use the manufactured battery cell.

For the pressing of the battery cells, a static pressure jig that presses the battery cells by applying a pad between the battery cells and adjusting the pressure using a pack wall (end plate) is mainly used. The static pressure jig is a jig disposed facing each other with respect to the battery cells, which uniaxially presses both or opposite sides of the battery cell in one direction, such as a vertical direction, of the battery cell.

If the battery cell is uniaxially pressed by a conventional battery cell pressing device, there can be a problem that pressure is not uniformly applied during charging/discharging of the battery cell where a material with a large volume change is used. If pressure is not uniformly applied during charging/discharging of the battery cell, there arises a problem that the energy density and lifetime performance of the battery are deteriorated.

In addition, if the battery cell is uniaxially pressed by a conventional battery cell pressing device, damage such as cracks of the battery cell, deterioration of performance of the cell due to increased resistance in a specific area of the cell, and internal short circuit can occur due to the non-uniform pressing. This can lead to deterioration in performance and lifetime of the battery cell.

In order to solve or address these problems and other limitations associated with the related art, the inventors of the present disclosure have completed a battery cell pressing device capable of applying a uniform driving pressure to a battery cell in which a material having a large volume change is used, and a battery pack including the same.

Various aspects of the present disclosure will now be described in more detail referring the drawings. All the components of each battery cell pressing device and each battery pack according to all aspects of the present disclosure are operatively coupled and configured.

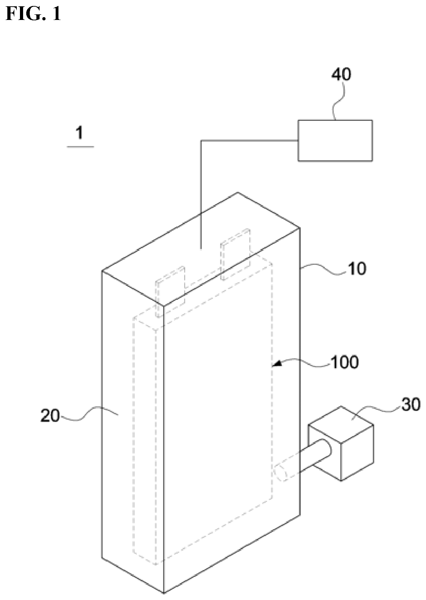

FIG. 1 illustrates a perspective view of a battery cell pressing device according to an aspect of the present disclosure.

Referring to FIG. 1, a battery cell pressing device 1 according to the aspect of the present disclosure includes a case 10 in which a battery cell 100 is disposed and a fluid 20 filling the inside of the case and pressing the battery cell 100. In various aspects, the battery cell 100 can be a secondary battery, or a solid state battery (SSB).

The battery cell pressing device 1 according to the present disclosure can be used when pressing is needed during charging/discharging of the battery cell 100. In aspects of the present disclosure, the case 10 can be also referred to as a vessel, a chamber or a receptacle.

According to one aspect, the shape of a case 10 of the battery cell pressing device 1 is not particularly limited, and can have, for example, a pouch shape, a cylindrical shape, or a prismatic shape. But aspects of the present disclosure are not limited thereto. The case 10 can have pressure resistance so as not to be deformed by the pressure of the fluid 20 located inside the case 10. For example, the case 10 can be not deformed at several tens of MPa or less, for example, 20 MPa, 15 MPa, or 10 MPa or less. More specifically, the case 10 can be pressed by the fluid 20 at a pressure of 1 MPa or more and 10 MPa or less, 2 MPa or more and 9 MPa or less, or 3 MPa or more and 8 MPa or less, and is not deformed within the above pressure range. But aspects of the present disclosure are not limited thereto. In addition, the case 10 can have water resistance or fluid resistance to prevent penetration of the fluid 20 into the case 10. From this point of view, a metal such as aluminum (Al), stainless steel (SUS), titanium (Ti), nickel (Ni), and iron (Fe), copper (Cu), or an alloy of two or more of them can be used as a material for forming the case 10, but is not limited thereto. For example, the case 10 can also be formed from composite materials such as carbon fiber reinforced polymers, fiberglass, or ceramic matrix composites, which can offer high strength-to-weight ratios and corrosion resistance. Additionally, advanced alloys like Inconel, Hastelloy, or titanium alloys can be used for applications requiring exceptional strength and chemical resistance. But aspects of the present disclosure are not limited thereto, and other materials that can withstand pressure can be used.

According to one aspect, the fluid 20 can press the battery cell 100 when charging/discharging the battery cell 100 with a charging/discharging device. In one aspect of the present disclosure, the battery cell 100 can be uniformly pressed isotropically by using the fluid 20 as a means for pressing the battery cell 100. That is, the fluid 20 can isostatically press the battery cell 100.

The pressure at which the fluid 20 presses the battery cell 100 can be equal to the pressure at which the fluid 20 presses on the case. The pressure at which the fluid 20 presses the battery cell 100 can be 1 MPa to 10 MPa. Specifically, the pressure at which the fluid presses the battery cell 100 can be 1 MPa or more, 2 MPa or more, 3 MPa or more, 4 MPa or more, 5 MPa or more, or 10 MPa or less, 9 MPa or less, 8 MPa or less, 7 MPa or less, or 6 MPa or less. If the pressure at which the fluid 20 presses the battery cell 100 is less than 1 MPa, the battery cell 100 can be not sufficiently pressed, thereby causing expansion of the battery cell 100 due to a gas or internal pressure in the battery cell 100. In addition, if the pressure at which the fluid 20 presses the battery cell 100 exceeds 10 MPa, physical and chemical damage to the battery cell 100 can occur.

As the fluid 20, a material that is not deformed by the pressure of the fluid itself can be used. In addition, as the fluid 20, a material that does not affect the performance or lifetime of the battery cell 100 can be used.

The fluid 20 can be gas or liquid, and specifically, the fluid 20 can be in the state of an extinguishing or non-flammable or non-volatile gas, oil, or gel. In some aspects, the fluid 20 can be a gas, such as air but aspects of the present disclosure are not limited thereto. For example, the fluid 20 can include inert gases such as nitrogen, argon, or helium. Additionally, the fluid 20 can comprise hydraulic fluids, silicone oils, or fluorinated compounds that exhibit low compressibility and chemical stability, but aspects of the present disclosure are not limited thereto.

If the fluid 20 is a gas, since it has a low weight and low energy density loss compared to a liquid, effective pressing can be achieved. Table 1 below shows the results of comparison of energy densities using air and water as internal fluids 20 of the battery cell pressing device 1 including the battery cell 100. Here, the battery cell pressing device 1 includes 10 battery cells and is made of or includes aluminum with a thickness of 0.5 mm.

[Table 1]

|  | battery | Pressing device comprising battery cell | |
| --- | --- | --- | --- |
|  | Cell | Internal fluid | |
|  |  | Air | Water |
| Energy (Wh) | 13.4 | 134 | 134 |
| Weight (g) | 36.3 | 836 | 967 |
| Energy density(Wh/kg) | 370 | 160 | 139 |

As shown in Table 1 above, if air was included as an internal fluid in the battery cell pressing device 1, it was confirmed that the energy density was higher due to the lower weight.

The battery cell pressing device 1 according to an aspect of the present disclosure can further include a fluid entrance 30 through which the fluid 20 is introduced or discharged.

For example, when the battery cell 100 is charged, the volume of the battery cell 100 can be increased, and at this time, when the pressure inside the case 10 is increased, the fluid entrance 30 can expel the fluid 20.

As another example, when the battery cell 100 is discharged, the volume of the battery cell 100 can be decreased, and at this time, when the pressure inside the case 10 is lowered, the fluid entrance 30 can introduce the fluid 20 to replenish the fluid 20 inside the case 10 to maintain the pressure of the fluid 20.

The fluid entrance 30 according to some aspects can further include a valve for controlling the inflow and outflow of the fluid 20.

The battery cell pressing device 1 according to an aspect of the present disclosure can further include a pressing member 40 for applying or adjusting the pressure inside the case 10. The pressing member 40 can be used to apply or adjust a driving pressure inside the case 10 where the battery cell 100 is disposed by using the fluid 20. In various aspects of the present disclosure, the driving pressure can refer to the applying or adjusting of the pressure inside the case 10 by the pressing member 40.

For example, the pressing member 40 can press on the fluid 20 that is in the case 10 to apply or adjust the pressure in the case 10. The pressing member 40 can press on the fluid 20 or include a means to press on the fluid 20 that results in an increase or a change in the pressure in the case 10. The pressing member 40 can be or include a piston or a hydraulic cylinder, but aspects of the present disclosure are not limited thereto. In various aspects of the present disclosure, the pressing member 40 can change a volume of the fluid 20 that is already in the case 10 to change the pressure in the case 10. Accordingly, once a predetermined amount or volume of the fluid 20 is filled in the case 10 using the fluid entrance 30, the pressing member 40 can apply, adjust, calibrate, or drive the pressure inside the case 10 by using the fluid 20.

A sealing member can be disposed on the pressing member 40 to prevent the fluid 20 filling the inside of the case 10 from being discharged to the outside of the case 10.

The battery cell pressing device 1 according to an aspect of the present disclosure can further include a pressure measuring member for measuring pressure within the case 10. The pressure measuring member can measure a change in pressure for adjusting the driving pressure of the case 10 during at least one of charging and discharging of the battery cell 100. In various aspects of the present disclosure, the pressure measuring member can include one or more types of pressure gauges. The pressure measuring member can include various types of pressure measurement devices such as mechanical pressure gauges, digital pressure transducers, piezoresistive sensors, capacitive pressure sensors, strain gauge pressure sensors, fiber optic pressure sensors, or microelectromechanical systems (MEMS) pressure sensors, but aspects of the present disclosure are not limited thereto. In some aspects, the pressure measuring member can also incorporate pressure switches, differential pressure sensors, or pressure transmitters to provide accurate and continuous monitoring of the pressure within the case, but aspects of the present disclosure are not limited thereto.

The battery cell pressing device 1 according to an aspect of the present disclosure can further comprise an electric wire member for inputting and outputting electrical signals of the battery cell 100. The electric wire member can be connected to the charging/discharging device to apply current to the battery cell 100 and measure voltage, or can be connected to the charging/discharging device to apply voltage to the battery cell 100 and measure current. In some aspects of the disclosure, the battery cell pressing device 1 can incorporate a wireless charging mechanism that replaces the physical electric wire member. This wireless charging system can utilize electromagnetic induction or resonant inductive coupling to transfer energy (e.g. apply current or voltage) to the battery cell 100 without the need for direct electrical connections. The wireless charging mechanism can include, for example, a transmitter coil outside the case 10 and a receiver coil connected to the battery cell 100 inside the case 10, allowing for charging and discharging operations to be performed while maintaining the sealed integrity of the case 10, but aspects of the present disclosure are not limited thereto.

The case 10 can further include a hole through which the electric wire member connected to the battery cell 100 to input and output the electric signal of the battery cell 100 passes. The hole can be a plurality of holes through which a plurality of the electric wire members connected to a cathode lead and an anode lead, respectively, pass.

A sealing member can be disposed around the hole to prevent the fluid 20 filling the inside of the case 20 from being discharged to the outside of the case 10. Some possible sealing members can include: O-rings made of materials such as silicone, nitrile rubber, or fluoroelastomers; Gaskets fabricated from compressed fiber materials, graphite, or PTFE; Mechanical seals with spring-loaded faces; Gland packing made of braided fibers or PTFE; Lip seals or radial shaft seals; Compression fittings with ferrules; Hermetic glass-to-metal seals; Epoxy or silicone sealants; Bellows seals made of metal or elastomers; Stuffing box seals with adjustable compression; Diaphragm seals made of flexible materials; Labyrinth seals for non-contact sealing; Magnetic fluid seals for rotating shafts; Inflatable seals that can be pressurized; or Brush seals made of fine metal or polymer fibers. The choice of sealing member can depend on factors such as the operating pressure, temperature, chemical compatibility with the fluid, and required service life. In some cases, a combination of sealing methods can be employed for redundancy and improved reliability, but aspects of the present disclosure are not limited thereto.

In one aspect of the present disclosure, the charging/discharging device can apply a current to the battery cell 100 through a conductive member to charge/discharge the battery cell 100, thereby activating it. The charging/discharging device can perform its function using various processes, such as a method of detecting a defect in an open circuit voltage (OCV) while aging after fully charging the battery cell 100; then fully discharging again to measure the discharge capacity; and then charging to 50% of the capacity for shipment. For example, the activation process can be performed under conditions of a current of 0.05C to 1C and a voltage of 1.5V to 5.0V, but is not limited thereto. Other processes, including any known process can also be used. For example, another process can be pulse charging, where short bursts of high current are applied to the battery cell, followed by rest periods. Additionally, the charging/discharging device can employ a constant current-constant voltage (CC-CV) method, where a constant current is applied until a certain voltage is reached, then the voltage is held constant while the current decreases.

The conductive member can serve to apply current to the battery cell 100 by connecting the battery cell 100 to the charging/discharging device. The conductive member can be a plurality of conductive members connected to the cathode lead and the anode lead, respectively. As a material for forming the conductive member, a conductive material can be used without limitation. For example, the conductive member can be a conducting electric wire. But aspects of the present disclosure are not limited thereto.

The battery cell 100, according to an aspect of the present disclosure, can be a pouch-type battery cell. The battery cell 100 pressed by the battery cell pressing device 1 can include a cathode, an anode, an electrolyte, and a separator. But aspects of the present disclosures are not limited thereto. In addition, a cathode lead and an anode lead connected to each of the cathode and the anode of the battery cell 100 can be further comprised.

The battery cell 100 can be a pouch-type battery cell in which the cathode, the anode, the electrolyte, and the separator are embedded in a pouch, and a portion of the lead is exposed to the outside of the pouch. The pouch-type battery cell can be manufactured by disposing the separator between the cathode and the anode; performing interlayer bonding by pressing by a cold isostatic press (CIP) or warm isostatic press (WIP) method; and then attaching the cathode lead and the anode lead and accommodating the electrode assembly thus formed in the pouch and sealing it.

Meanwhile, at least two of the size of the cathode, the size of the anode, and the size of the separator of the battery cell 100 can be different from each other. For example, the size of the cathode can be smaller than the size of the anode and the size of the separator, respectively. Here, the size can mean at least one of a length in a longitudinal direction (L) and a length in a width direction (W). But aspects of the present disclosure are not limited thereto.

The separator can be included when a liquid electrolyte is used. If a cathode, an anode, and a solid electrolyte are contained in the pouch, the separator can be omitted. In some aspects, the solid electrolyte can function as both an electrolyte and a separator. Therefore, in one aspect according to the present disclosure, the battery cell pressing device 1 can be used not only for batteries using a solid electrolyte, but also for batteries using a liquid electrolyte and requiring high pressing force during charging/discharging (for example, silicon anode battery, lithium metal battery, etc.). But aspects of the present disclosure are not limited thereto.

However, the structure of the battery cell 100 pressed by the battery cell pressing device 1 according to an aspect of the present disclosure and activated by the battery cell charging/discharging device is not limited to the structure of the battery cell 100 shown in the drawing.

According to the battery cell pressing device 1 according to an aspect of the present disclosure, the fluid 20 is injected into the case 10 through the fluid entrance 30 of the case 10 in which the battery cell 100 is disposed, and the injected fluid 20 can uniformly press the battery cell 100 isotropically. In this state, the battery cell 100 can be activated by charging/discharging the battery cell 100 in the battery cell pressing device 1. Therefore, the battery cell pressing device 1 according to the present disclosure can prevent deterioration in performance and lifetime of the battery cell 100 during charging/discharging thereof due to application of isostatic pressing.

The present disclosure, according to some aspects, can provide a battery pack including the battery cell pressing device 1. That is, the case 10 itself of the battery cell pressing device 1 can be applied as a battery module. In general, in the activation process, after putting the battery cells 100 into the battery cell pressing device 1 to activate them, the activated battery cells 100 can be taken out of the battery cell pressing device 1 to include or make the battery cells 100 into a battery module or pack.

However, according to aspects of the present disclosure, the case (or pack, container, module, etc.) itself of the battery cell pressing device 1, according to aspects of the disclosure, can be used as a battery module or pack, and thus, such use can have excellent economic effects.

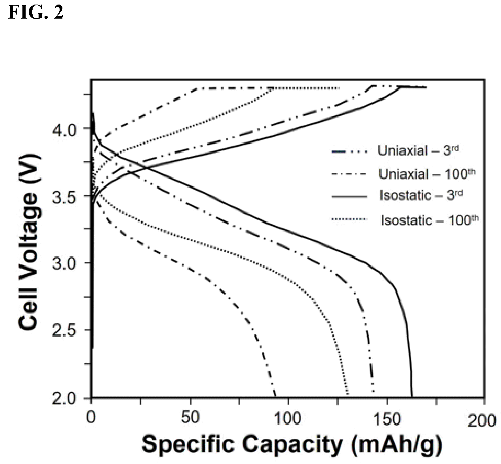

FIG. 2 is a diagram illustrating voltage curves after a cycle of a battery cell using a battery cell pressing device according to an aspect of the present disclosure or a battery cell pressing device using a static pressure jig. Here, the battery cell pressing device according to an aspect of the present disclosure is one in which the battery cell is pressed through isostatic pressing, and the battery cell pressing device using the existing static pressure jig presses the battery cell through uniaxial pressing.

Referring to FIG. 2, it can be seen that the battery cell using the battery cell pressing device according to an aspect of the present disclosure has a higher cell voltage at the same specific capacity than the battery cell using the battery cell pressing device of the static pressure jig. It was confirmed that since the battery cell using the static pressure jig has a higher resistance than the battery cell using the battery cell pressing device according to the present disclosure and thus has a larger overvoltage of the battery cell, the cell voltage of the battery cell isotropically pressed using the battery cell pressing device according to the present disclosure was higher.

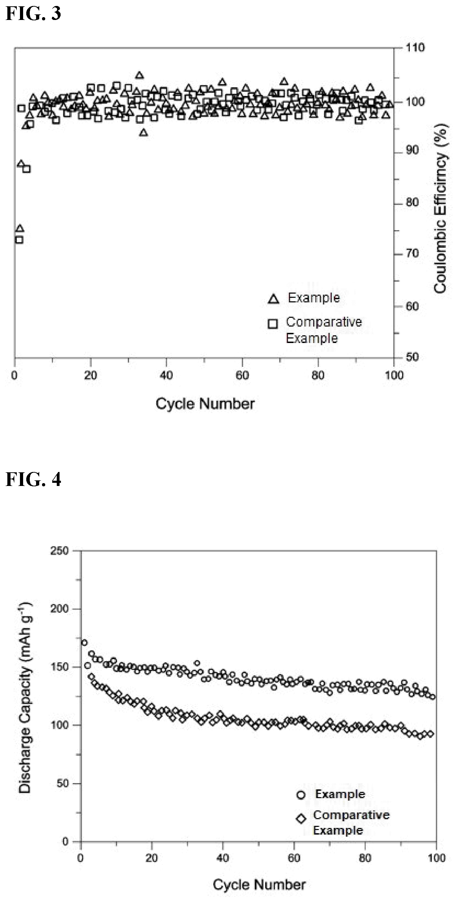

FIG. 3 is a diagram illustrating the coulombic efficiency of a battery cell using a battery cell pressing device according to aspects of the present disclosure with a battery cell pressing device using a static pressure jig.

FIG. 4 is a diagram illustrating the discharge capacity of a battery cell using a battery cell pressing device according to an aspect of the present disclosure and the discharge capacity of a battery cell pressing device using a static pressure jig.

In FIG. 3 and FIG. 4, the battery cell using the battery cell pressing device according to one or more aspects of the present disclosure is indicated as the Example, and the battery cell using the battery cell pressing device using the static pressure jig is indicated as the Comparative Example.

Referring to FIGS. 3 and 4, it can be seen that as multiple cycles are proceeded, although the coulombic efficiencies of the battery cell using the battery cell pressing device according to aspects of the present disclosure and the battery cell using the battery cell pressing device of the static pressure jig are similar, the battery cell using the battery cell pressing device according to aspects of the present disclosure has higher lifetime performance than the battery cell using the battery cell pressing device of the static pressure jig.

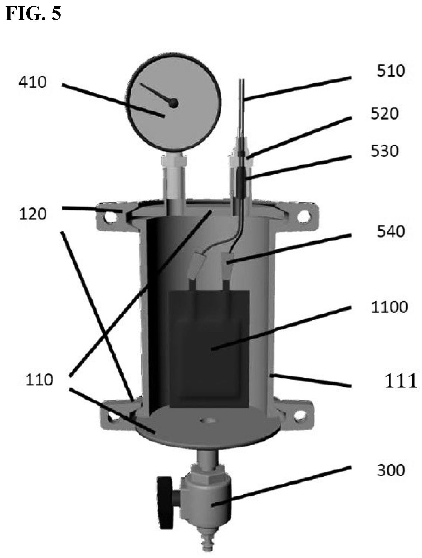

FIG. 5 is a cross sectional view of a battery cell pressing device according to another aspect of the present disclosure.

Referring to FIG. 5, the battery cell pressing device can include a vessel wall 111 (or case, case wall or sidewall) accommodating a space so that a pouch cell 1100 can be placed therein, one or more vessel caps 110 to close the vessel wall 111, one or more vessel clamps 120 to secure the vessel caps 110 to the vessel walls 111, a gas valve 300 such as a ball valve to control ingress and egress of a medium that will provide pressure, and a pressure gauge 410 to measure or determine the pressure within the vessel wall 111. To measure or determine various aspects of a pouch cell 1100 in the battery cell pressing device, wires 510 can be provided to connect to the pouch cell 1100 by connectors 540. One example of a connector can be crocodile clips.

A fit through connector 520 can be provided on the battery cell pressing device to provide access to the space in the vessel walls 100. In various aspects of the present disclosure, the fit through connector 520 can located in the vessel cap 110, but such is not required, and the fit through connector 520 can be located on the vessel wall 111. The location of the gas valve 300 can also vary, and can be in the vessel cap 110, the vessel wall 111, or can be integrated with the pressure gauge 410 or the fit through connector 520. A sealant can be used to ensure a seal in the fit through connector 520, as well as the pressure gauge 410, the gas valve 300 or the vessel clamps 120, among others.

In an aspect of the present disclosure, the vessel wall 111 can be cylindrical but such is no required, and other shapes can be used. The vessel wall 111 can have an annular protrusion at an open end of the vessel wall 111, the annular protrusion being configured to couple to an annular end of the vessel cap 110. The vessel cap 110 can include an interior recess at an interior surface of the vessel cap 110 to receive the annular protrusion of the vessel wall 111 and the annular end of the vessel cap 110. In an aspect of the present disclosure, a diameter of the vessel wall 111 can be approximately 10 cm, and a height of the vessel wall can be approximately 20 cm, but aspects of the present disclosure is not limited thereto.

In various aspects of the present disclosure, one or more apertures can be provided in the battery cell pressing device. For example, a first aperture can be provided for the probe wire 510, a second aperture can be provided for the pressure gauge 410, and a third aperture can be provided for the pressure valve (or gas valve) 300. When the three apertures are provided, the third aperture can be located distal from the first aperture and the second aperture. But aspects of the present disclosure are not limited thereto.

In various aspects of the present disclosure, the battery cell pressing device can include at least one window to allow a user to see into the interior of the battery cell pressing device. The at least one window can be located at the vessel wall 111, but aspects of the present disclosure are not limited thereto. For example, the at least one window can also be located at the vessel cap 110. In various aspects of the present disclosure, the at least one window can include one of glass, quartz and beryllium, but aspects of the present disclosure are not limited thereto, and other transparent materials can be used. When two or more windows are provided, the placement of the two windows can aligned so that a probing beam can be used to probe the battery cell located at an axis of alignment of the two windows. The probing beam can be an x-ray or a sonic wave. But aspects of the present disclosure are not limited thereto.

In various aspects of the present disclosure, various elements of the battery cell pressing device can include or be formed of one of steel, stainless steel, aluminum and titanium, but other materials that has strength to withstand pressure and cycling pressures can also be used. Also, the battery cell pressing device can include a heater to heat the fluid or a pressure medium when the pressure medium is applying isostatic pressure to the solid state battery in battery cell pressing device. In various aspects of the present disclosure, the battery cell pressing device can be subjected to repeated application of pressure of approximately 1 MPa to 5 MPa from the pressure medium at room temperature. The battery cell pressing device can be referred to as an isostatic pouch cell holder (IPCH). In various aspects of the present disclosure, the IPCH can be one or more of the battery cell pressing device of FIGS. 1 and 5, but aspects of the present disclosure are not limited thereto.

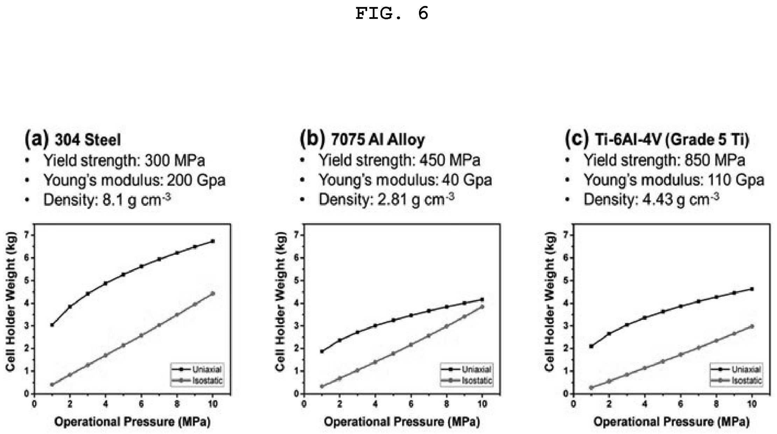

FIG. 6 shows plots of weight to pressure rating plots of a comparative example and the battery cell pressing device according to aspects of the present disclosure.

Referring to FIG. 6, as fluid is employed as pressurizing media in the battery cell pressing device, where pressure is identically applied to all points in all directions. Hence, deformation of the vessel wall and arrangement of pouch cells will not affect the pressure uniformity. As a result, thinner walls can be used in the battery cell pressing device to reduce module weight. The estimated required weights of the comparative examples and the battery cell pressing device using different metal alloys with a pressure rating from 1 to 10 MPa are presented. In (a) of FIG. 6, values for 304 steel are shown. In (b) of FIG. 6, values for 7075 Al alloy is shown. In (c) of FIG. 6, values for Ti-6Al-4V is shown. But aspects of the present disclosure are not limited thereto, and other materials can be used.

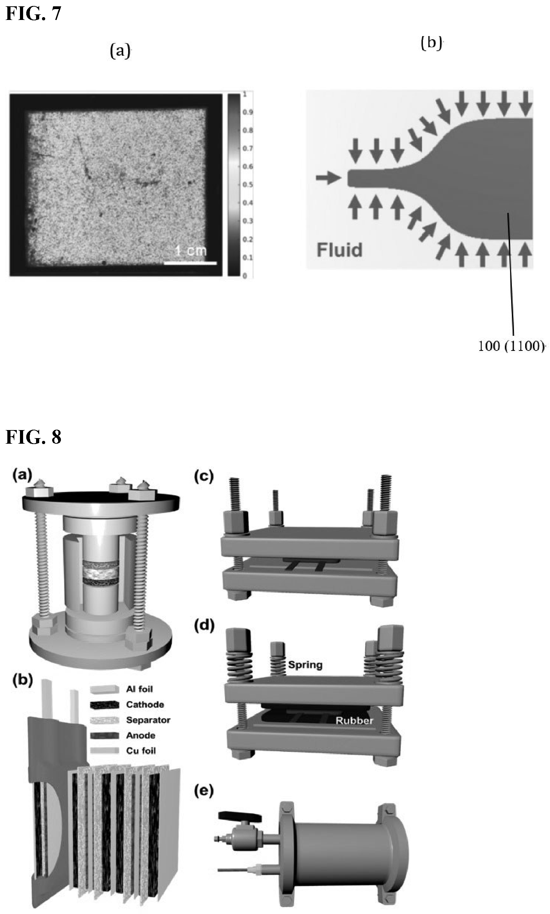

FIG. 7 depicts a force distribution of isostatic pressure applied by fluids with the battery cell pressing device according to aspects of the present disclosure. In (a) of FIG. 7, shown is a pressure paper that can be vacuum sealed into a pouch bag, pressurized with the IPCH and the pressure distribution is presented. In (b) of FIG. 7, shown is a uniform pressure distribution applied to the pouch cell 100. This can be explained by Pascal's principle, which states that a change in pressure applied at any point in the confined fluid at rest is transmitted undiminished throughout the fluid in all directions. By us of the fluid, application of isostatic pressure can be obtained.

All-solid-state batteries (ASSBs) are considered potential successors in the realm of energy storage technologies, attributed to their increased safety stemming from the substitution of organic liquid electrolytes in conventional Li-ion batteries with less flammable solid-state electrolytes (SSEs). However, ASSBs are more sensitive to cycling pressure, as pressure is crucial to maintain intimate interfacial contacts. Most battery research utilizes uniaxial cell holders to apply cycling pressure. There are issues with uniaxial cell holders: limited ability to accommodate volume change of electrode materials during cycling, ununiform pressure distribution, and difficult to regulate pressure over a long period of time due to material fatigue and limitations on mechanical design. In our research, isostatic pouch cell holders (IPCHs) were designed to address these issues. As fluids are used as pressure media, uniform cycling pressure can be achieved, and cycling can be regulated accurately. To demonstrate the potential of IPCHs, $LiNi_{0.8}Co_{0.1}Mn_{0.1}O_2$ (NCM811) | $Li_6PS_5Cl$ (LPSCl) | Si all-solid-state pouch cells (ASSPCs) were fabricated, and rate capability tests and long-term cycling (one hundred cycles) were performed under 1 to 5 MPa. The electrochemical performance is found to improve with increased cycling pressure, and 2 MPa can be the minimum required cycling pressure for NCM811 | Si system. Finally, a bilayer ASSPC with a theoretical capacity of 100 mAh can be cycled using an IPCH and obtained a Coulombic of 76.9%, a discharge capacity of 173.6 mAh $g^{-1}$ (88.1 mAh) in the first cycle, and 150 mAh $g^{-1}$ capacity retention after fifty cycles. IPCHs were proven promising for pressure studying and potentially commercialization for ASSPCs.

All-solid-state batteries (ASSBs) are hailed as one of the next generation storage technologies and tremendous efforts have been invested to their development. As solid-state electrolytes (SSEs) are employed to replace liquid electrolytes in conventional Li batteries, ASSBs exhibit reduced flammability and leakage issues. Moreover, anodes with high energy density, such as pure Si, have been reported to achieve long cycle life in ASSBs, but is challenging in liquid electrolytes as Si will suffer from continuous solid electrolyte interface (SEI) formation due to its large volume change. Despite the advantages, there are many engineering challenges for ASSBs stemming from solid-solid contacts on interfaces. Unlike liquid electrolytes, SSEs cannot flow and infiltrate the pores in the electrodes. Moreover, volume expansion of electrode materials can potentially cause interface detachment. These lead to poor interfacial ion transfer and deteriorate the electrochemical performance of SSEs. As such, pressure becomes a crucial factor to ensure the performance of ASSBs.

FIG. 8 shows structures of various uniaxial pouch cell holders (UPCHs) compared to structures of an isostatic pouch cell holder (IPCH). In FIG. 8, (a) shows a UPCH with a plunger cell clamped in a cell holder, and (b) shows a multilayer pouch cell, (c) shows a bare UPCH with simple metal plates, (d) shows an UPCH with springs and rubber gaskets, and (e) shows an IPCH.

Pellet type ASSBs are usually employed in research labs for electrochemical tests. A polymer die and a pair of metal plungers can be employed to contain and apply fabrication pressure to pelletize the materials as shown in (a) of FIG. 8. During electrochemical tests, a cell holder consisting of bolts, nuts and plates is required to apply cycling pressure and the metal plungers serve as current collectors. As most inorganic SSEs are brittle, SSE layers typically would have a high thickness of approximately 500 $\mu$m to guarantee a sufficient strength to support the cells mechanically. This reduces the energy density of ASSBs, as SSE layers do not store energy.

Moreover, due to the friction at the die walls during uniaxial compaction, it is challenging to achieve a uniform density distribution throughout the whole pellet, and this can negatively affect their electrochemical performance. Having thinner layer thickness, larger electrode area, and do not require polymer dies, pouch cells not only exhibit significantly higher energy density, but also achieve better density distribution after calendaring.

Further, (b) of FIG. 8 depicts such a multilayer pouch cell. As the wrapping materials of pouch cells are flexible, isostatic pressure can be applied to further improve the density uniformity. Pouch cells can include various types of binders, such as polymer binders, or all solid state binders. In some all solid state binders, those purported to all solid state has an excess amount of polymer binders, Li salts, and even solvents to compensate for performance issues that come from not achieving a full solid state binders, and such partial polymer binders can defeat the safety feature of ASSBs. Nevertheless, several all-solid-state pouch cells (ASSPC) employing only inorganic SSE with low amount of binders can be used for various multilayer pouch cells (see **Table** 2 ).

**Table** 2. Formats and the cycling conditions of ASSPC

| Cathode \| SSE \| Anode | Temperature (°C) | Fabrication pressure (MPa) | Cycling Pressure (MPa) | cycle number | areal capacity (mAh cm$^{-2}$) | C rate | Dimension (cm$^2$) |
|---|---|---|---|---|---|---|---|
| $LiNi_{0.8}Co_{0.15}Al_{0.05}O_2$ \| $Li_2SeP_2S_5$ \| **Graphite** | 25 | | | 100 | 4.2 | 0.1 C | 8.8x5.3 |
| $LiNi_{1/3}Co_{1/3}Mn_{1/3}O_2$ \| **75 $Li_2S\cdot25$** $P_2S_5$ \| **Graphite** | 30 | 330 MPa | | 10 | 1.536 | C/24 | 2x2 |
| $LiNi_{0.6}Co_{0.2}Mn_{0.2}O_2$ \| $Li_6PS_5Cl$ \| **Graphite** | 30 | 492 MPa | | | 4.2 | 0.025 C | 8x6 |
| $LiNi_{0.8}Co_{0.1}Mn_{0.1}O_2$ \| $Li_6PS_5Cl$ \| **C-Ag** | 60 | 490 MPa | 2 | 1000 | 6.8 | 0.5 C | 11.2x6.7 |
| $LiNi_{09}Co_{0.05}Mn_{0.05}O_2$ \| $Li_6PS_5Cl$ \| **PVD-Si** | 25 | 300 MPa | 20 | 50 | 3 | 0.05 C | 2.5x2.5 |
| S \| $Li_6PS_5Cl$ \| Li | 30 | 300 MPa | | 10 | 3 | 0.01 C | 3x3 |
| $LiNi_{0.8}Co_{0.1}Mn_{0.1}O_2$ \| $Li_6PS_5Cl$ \| **LiIn** | 25 | | | 200 | | 0.15 C | 6x6 |
| **Sulfur \| Solid electrolyte \| LiIn** | 30 | 500 MPa | | 50 | 3.2 | 0.05 - 2 C | |
| $LiNi_{0.6}Co_{0.2}Mn_{0.2}O_2$ \| $Li_6PS_5Cl$ \| **LiIn** | | | | 100 | 4 | 0.1 C | |

Most pouch cells can have areal capacities of more than 3 mAh cm$^{-2}$, which is similar to or greater than that in many commercial Li batteries. Nevertheless, many commercial pouch cells can have C-rates lower than 0.1 C, and an elevated temperature can be required to realize higher C-rates and areal capacities. As SSEs do not flow and conform to a shape of electrode materials like those of liquid electrolytes, a pressure must be applied to ASSBs to ensure intimate interfacial contact, both in fabrication and during cycling. Many ASSBs are manufacture under a fabrication pressure of typically 300 to 500 MPa, without mentioning cycling pressure. However, cycling pressure can be a more important metric, as high cycling pressure will vastly increase the weight of cell holders and detriment the module energy density. Since a low cycling pressure usually reduces the interfacial contact, and thus results in worse electrochemical performance of ASSBs, it is important to provision cell holders that provide uniform cycling pressure.

With reference to (c) of FIG. 8, Pouch cell holders comprising of bolts, nuts, and rigid plates can be employed to apply uniaxial pressure to pouch cells. Some can attach bearings between moving plates and bolts to ensure smooth movement and parallelism. However, when applying uniaxial pressure, the cycling pressure of ASSBs can change during cell cycling due to the volume change of electrode materials. For example, Si can undergo up to 400% of volume expansion and the thickness of Li metal anodes increases approximately 5 $\mu$m when each mAh cm$^{-2}$ is plated. This can negatively affect their electrochemical performance, especially when pressure sensitive materials, such as Li metal, are used. To address this immediate problem, springs can be incorporated into the cell holders to accommodate cycling volume change with reference to (d) of FIG. 8. Such a design can successfully reduce the cycling volume change of a $LiNi_{0.8}Co_{0.1}Mn_{0.1}O_2$ (NCM811) | Li cell, for example, from 2 MPa to less than 0.5 MPa, and doubled its critical current density, for example. But aspects of the present disclosure are not limited thereto. Nevertheless, rubber and springs can be susceptible to material fatigue and the applied force would decrease over time. The cell pressure can also change if the ambient temperature fluctuates, since the thermal expansion coefficients of pouch cells and bolts are different. As such, pressure regulation systems are required to ensure the stability of cell cycling. Unfortunately, regulating the pressure accurately by turning the bolts is challenging, as the motors need to overcome large friction under high pressure load, and extra efforts are needed to synchronize the torque all bolts in one cell holder. To tackle this issue, fluids, including gases and liquids, can be utilized as pressurizing media to apply isostatic cycling pressure. Gases can be used when light weight, low cost, or low X-ray absorption (e.g., in-situ cell characterization application) are addressed, and liquids can be employed when pressure load and heat dissipation are demanding. With reference to (e) of FIG. 8, an isostatic pouch cell holder (IPCH) can utilize a chamber and gaskets to contain the pressurizing fluid and ASSPCs, in contrast to the bolts and nuts of the UPHC. But aspects of the present disclosure are not limited thereto.

With reference to (e) of FIG. 8, a valve can be installed to fill or evacuate the fluid, and a wire fit-through can be implemented to electrically connect ASSPCs inside the chamber. As fluids are significantly more compressible than solids, especially gases, IPCHs can easily accommodate cell volume change during cycling. Moreover, the pressure regulating systems of pressurized fluids and gases can be used to maintain and achieve a constant cycling pressure in IPCHs for an extended period of time, even in an environment with large temperature fluctuation.

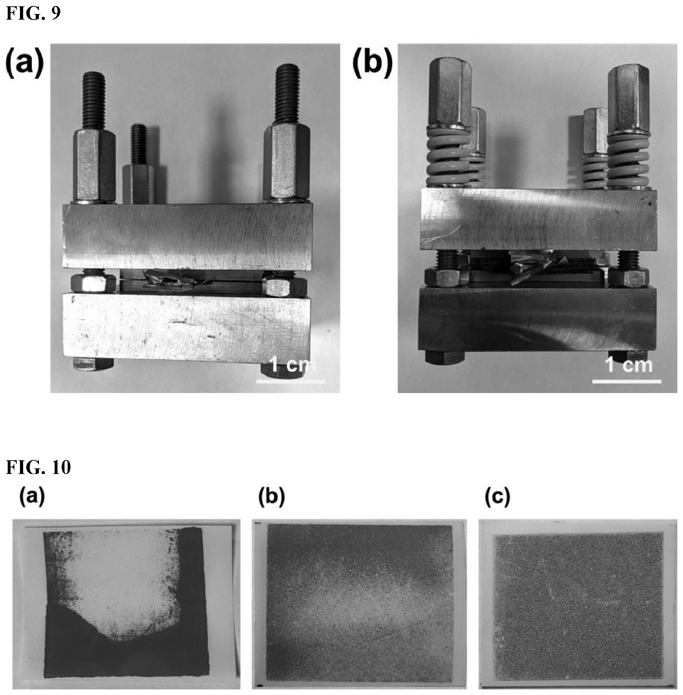

With reference to FIG. 9, a bare UPCH and improved UPCH with springs and rubber gaskets are shown. Specifically, (a) of FIG. 9 shows a bare UPCH with only bolts and nuts, and (b) of FIG. 9 shows an improved UPCH with springs and rubber gaskets. To observe the pressure distribution, pressure papers can be clamped in each cell holder.

With reference to FIG. 10, shown are images of reflecting pressure distribution imparted by various UPCHs and an IPCH. Specifically, (a) of FIG. 10 shows the pressure distribution by a bare UPCH with metal surface per (a) of FIG. 9, (b) of FIG. 10 shows the pressure distribution by an improved UPCH with rubber gaskets and springs per (b) of FIG. 9, and (c) of FIG. 10 shows the pressure distribution by an IPCH per (e) of FIG. 8. Upon receiving a pressure higher than a threshold, the pressure paper can turn color, such as red.

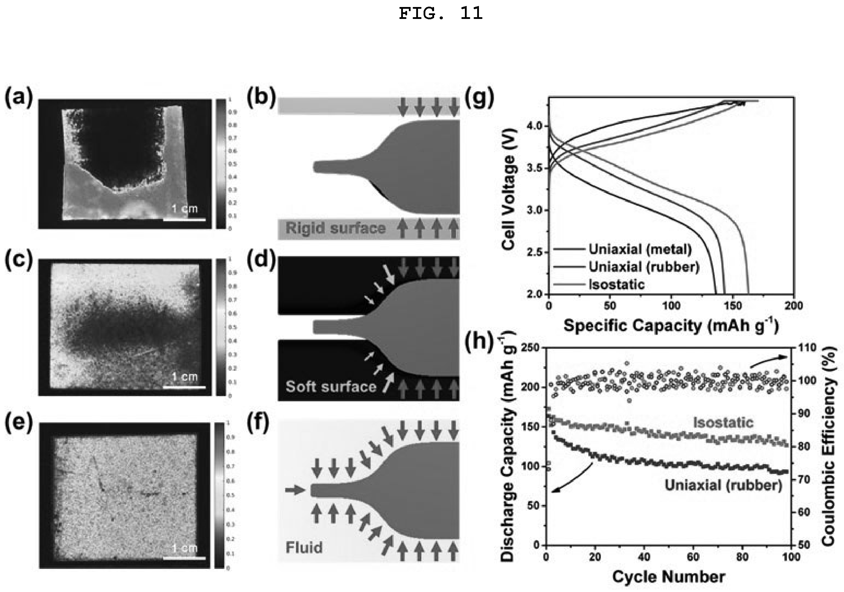

Further details of the pressure distribution on respective pressure paper are shown with reference to (a), (c) and (e) of FIG. 11, which corresponds to those of (a), (b) and (c) of FIG. 10, respectively.

When torquing the bare UPCH, a torque wrench can be used to torque all four nuts sequentially and the torque value can be gradually increased in each rotation to the target value to ensure parallelism of the metal plates at all time. Nevertheless, a non-uniform pressure distribution can be obtained for the bare UPCH as shown in (a) of FIG. 11. This is so because, when a rigid surface (such as bare metal) is used to apply a uniaxial pressure, areas that are out of contact (e.g., the edges of ASSPCs or imperfect surface flatness of the metal plates forming concave regions) will receive a lower or no pressure as represented in (b) of FIG. 11.

These problems of the bare UPCH can be somewhat mitigated with the improved UPCH, as rubber gaskets can conform to the shape of the metal plates and the ASSPC. Nevertheless, a uniform pressure distribution is still not observed as shown in (c) of FIG. 11, as degree of deformation of the rubber gaskets can be lower at the areas with larger gaps, resulting in lower pressure at such areas as represented in (d) of FIG. 11.

Meanwhile, IPCH's provide improvement in the uniformity of cycling pressure. An aspect of the IPCH is shown in FIG. 5.

With reference to FIG. 5, Air can be selected as pressurizing medium because of availability and low cost. The pressure paper vacuum sealed into a pouch bag, and pressurized within the IPCH and the pressure distribution is shown in (e) of FIG. 11, which show a uniform pressure distribution, as represented by (f) of FIG. 11, and is a result of Pascal's principle, which states that a change in pressure applied at any point in the confined fluid at rest is transmitted undiminished throughout the fluid in all directions.

Further, (g) of FIG. 11 shows voltage profiles of second cycle and (h) of FIG. 11 shows the reversible discharge capacity of ASSPCs when uniaxial and isostatic pressures are applied for NCM811 | $Li_6PS_5Cl$ (LPSCl) | Si ASSPCs with a cathode size of 3.5 x 1.5 $cm^2$ and an areal capacity of 4 mAh $cm^{-2}$, which are calendered at 500 MPa and pressurized with the three pouch cell holders, and cycled under 5 MPa at ambient temperature.

The cycling pressure of the UPCH can be measured by the torque values of bolts and nuts, and that of IPCH can be measured by observing the pressure gauge. With reference to (g) of FIG. 11, it can from the voltage profiles of the second cycle, that the cell pressed by the bare ICPH is worse during charging if uniaxial pressure was applied with rigid metal surfaces (bare ICPH), possibly due to the worse pressure uniformity, while the cells pressed with improved UCPH and ICPH can successfully reached 100 cycles. As IPCH provide better pressure uniformity and does not experience material fatigue which can lead to cycling pressure drop over time, the IPCH can provide the cells with higher discharge capacity throughout 100 cycles and less capacity loss compared to those of even the improved UPCH.

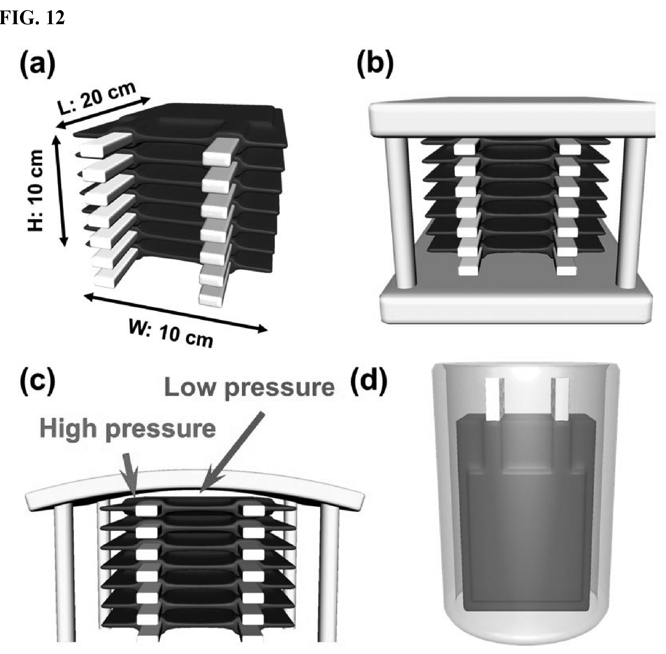

FIG. 12 shows various comparative schematics of cell stacks. Particularly, (a) of FIG. 12 shows a cell stack according to an aspect of the present disclosure, (b) of FIG. 12 represents the cell stack placed in a cylindrical UPCH, (c) of FIG. 12 represents bending of a UPCH plate when its thickness is insufficient, and (d) of FIG. 12 represents a cell stack in an IPCH. The dimension of the cell stack can be 20 x 10 x 10 $cm^3$. In various aspects of the present disclosure, IPCHs can be more energy dense than UPCH at a module level. There are two physical limitations that IPCHs can avoid relative to the UPCH. First, the number of cells in a cell stack can be greater in the UPCH compared to that of the IPCH, and a flex of pressurizing plates can be avoided in the UPCH as the pressurizing plates are not used in the IPCH. Also, in various aspects of the present disclosure, configurations of one or more of the cell stacks can be one of a single cell stacking where individual sheets are stacked in sequence, a Z-stacking where one of the sheets are continuously placed in between other sheets, a cylindrical winding of the sheets, and prismatic winding, but aspects of the present disclosure are not limited thereto.

With reference to (b) of FIG. 12, when a UPCH is used, pressure must be transmitted through other ASSPCs. As such, all ASSPCs, including all layers inside the pouches, must be perfectly aligned, which becomes more challenging as the number of cells in one stack increases. with reference to (c) of FIG. 12, the pressurizing plates must also be thick enough to resist bending, which can result in applying higher pressure to the edges and lower pressure to the centers of ASSPCs.

On the other hand, as fluid is employed as pressurizing media in an IPCH, pressure is identically applied to all points in all directions. Hence, deformation of the vessel wall and arrangement of ASSPCs will not affect the pressure uniformity. As a result, thinner walls can be used in IPCHs to reduce module weight. The estimated required weights of UPCHs and IPCHs using different metal alloys with a pressure rating from 1 to 10 MPa are presented in FIG. 6. Specifically, FIG. 6 shows the weight - pressure rating plots of UPCHs and IPCHs, whereby (a) of FIG. 6 shows that of 304 Steel, (b) of FIG. 6 shows that of 7075 Al alloy, and (c) of FIG. 6 shows that of Ti-6Al-4V Ti alloys, as they have different density, yield strength and Young's modulus. As shown with reference to FIG. 6, the IPCHs are all significantly lighter than UPCHs for each alloy, for the same density, yield strength and Young's modulus. Thus, IPCHs can provide advantage in energy density, for example, compared to the UPCHs. But aspects of the present disclosure are not limited thereto.

IPCHs gain even more weight advantage over UPCHs when polymers and composite materials, which often exhibit high tensile strength but low Young's modulus, are employed. Implementing ASSPC formats with higher energy density, such as jerry roll and Z-stacking, gives IPCH a further edge, as there is fewer shape limitations for the isostatic press.

With reference to FIG. 6, the pressure rating plots of 304 stainless steel, 7075 Al alloy, and Ti-6Al-4V are provided, but aspects of the present disclosure are not limited thereto. For example, any light and tough materials, such as carbon fiber or glass fiber, can be used as materials to make IPCHs more competitive. But aspects of the present disclosure are not limited thereto. Meanwhile, Table 3 summarizes the mechanical characteristics of 304 stainless steel, 7075 Al alloy, and Ti-6Al-4V

**Table 3.**

|  | **Yield** Strength (MPa) | **Young's modulus** (GPa) | **Density** |
|---|---|---|---|
| 304 SS | 200 MPa | 200 | 8.00 g/cm3 |
| 7075 Al | 450 MPa | 40 | 2.81 g/cm3 |
| Ti-6Al-4V | 850MPa | 110 | 4.43 g/cm3 |

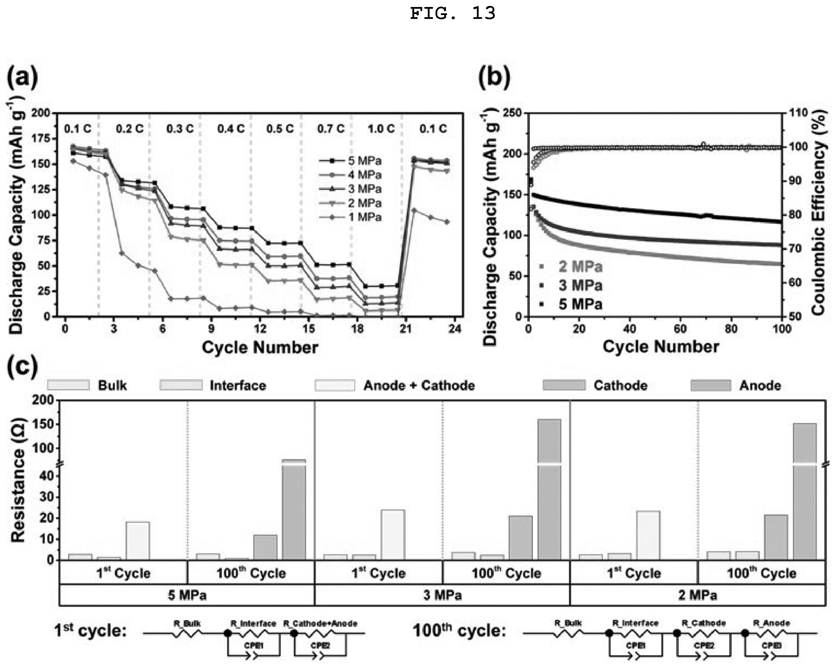

With reference to FIG. 13, cycling pressure characteristic of ASSPCs using IPCH are provided. The cycling pressure characteristics are provided for a temperature of 30°C to avoid the fluctuation of ambient temperature so that ensure stable cell performance.

In FIG. 13, (a) is a graph showing reversible discharge capacities of pouch cells with different operational pressure at different current densities, (b) is a graph showing the capacity retention and Coulombic efficiency plots of pouch cells fabricated at 500 MPa and cycled at 5 MPa, 3 MPa and 2 MPa, and (c) shows an electrochemical impedance spectroscopy (EIS) fitting results of the pouch cells measured after 1st and 100th cycle at 50% state of charge.

With reference to (a) of FIG. 13, all ASSPCs were activated at the first cycle at 5 MPa, and reduced to the target cycling pressures. At 0.1 C, cells cycled at all pressures except 1 MPa exhibits a similar discharge capacity of approximately 160 mAh g$^{-1}$, and the slight difference is due to batch variance of cathode composites. 2 MPa is the minimum required cycling pressure to keep a good interfacial contact in the ASSPCs. The effect of cycling pressure is evident after the C-rate increased above 0.3 C. At 1 C, the polarization of the cell grows drastically that only 30 mAh g$^{-1}$ could be obtained with a cycling pressure of 5 MPa. Nevertheless, ASSPCs cycled above 2 MPa regains most of their discharge capacities when the C-rate decreased back to 0.1 C. With reference to (b) and (c) of FIG. 13, three cycling pressures, 5, 3 and 2 MPa can be selected to conduct the long cycle at 0.2 C, since the current is moderate to distinguish the effect of cycling pressure to capacity retention while not vastly deteriorating the discharge capacities according to the rate capability. As the cycling pressure decreased, more cycles are needed for the Coulombic efficiency to reach close to 100%, and the initial discharge capacity decreases from 149.7 mAh g$^{-1}$ at 5 MPa to 135.37 mAh g$^{-1}$ at 2 MPa. The capacity retention after 100 cycles also can deteriorate from 77.8% at 5 MPa to 47.7% at 2 MPa, due to loss of interface contact. As electrode materials undergo repetitive volume change, pressure can be applied to maintain physical contact between SSE and electrode materials, and a higher pressure can better to support intimate interfacial contact.

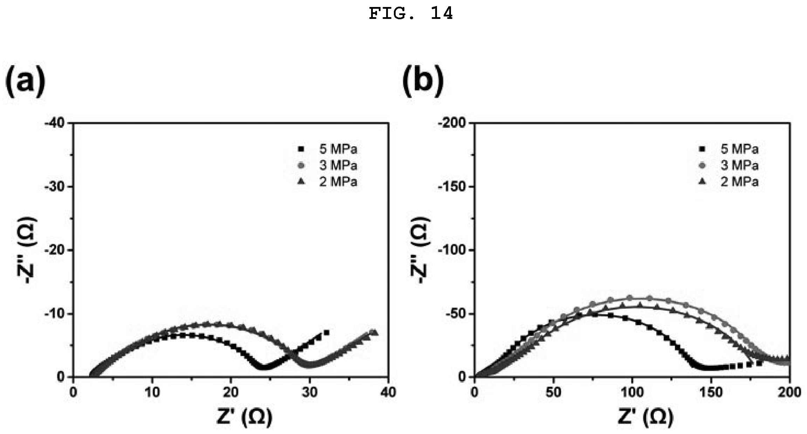

FIG. 14 shows the Nyquist plots of pouch cells fabricated at 500 MPa and cycled at 5 MPa, 3 MPa and 2 MPa using IPCHs.

With reference to FIG. 14, (a) is a graph of the electrochemical impedance spectroscopy (EIS) of the pouch cells for the first cycle at the state of charge of 50% and (b) is a graph of the EIS of the pouch cells for the one hundredth cycle at the state of charge of 50%. The electrochemical impedance spectroscopy (EIS) of first and one hundredth cycle of the three ASSPC from (c) of FIG. 13 were fitted (see Tables 4 and 5 below).

Four components, listing from high to low frequency, the bulk, grain boundary interfaces of SSE, cathode, and anode, are listed. Cathode and anode components were combined in the first cycle. All ASSPCs exhibit similar SSE impedance values at different cycling pressures and cycle numbers, indicating that SSE separator layers are stable during cycling and not sensitive to cycling pressure. The combined impedance of cathode and anode exhibits a higher impedance at the first cycle. After 100 cycles, the anode impedance increases drastically, due to large volume change of Si and formation of solid electrolyte interface (SEI). Cathode experiences smaller volume change during cycling and is protected by $Li_3BO_3$ coating, resulting in milder impedance increases. When decreasing the cycling pressure from 5 to 3 and 2 MPa, both the cathode and anode impedance approximately doubles. Maintaining good interfacial contacts with suitable cycling pressure are important. In various aspects of the present disclosure, the cathode and the anode can undergo volume changes, which an include the cathode of NCM811 undergoing up to a 5% volume change, and for the anode, 5 $\mu$m per 1 mAh cm$^{-2}$ for Li, and up to 400% for Si.

**Table 4**

| Cycling Pressure | Cycle Number | Bulk | Interface | Cathode | Anode |
|---|---|---|---|---|---|
| 5 MPa | 1st | 2.75 | 1.428 | 18.27 | |
| | 100th | 3.022 | 0.97127 | 12.01 | 76.09 |
| 3 MPa | 1st | 2.609 | 2.462 | 23.92 | |
| | 100th | 3.697 | 2.391 | 21.06 | 160.1 |
| 2 MPa | 1st | 2.575 | 3.182 | 23.25 | |
| | 100th | 4.05 | 4.16 | 21.5 | 151.4 |

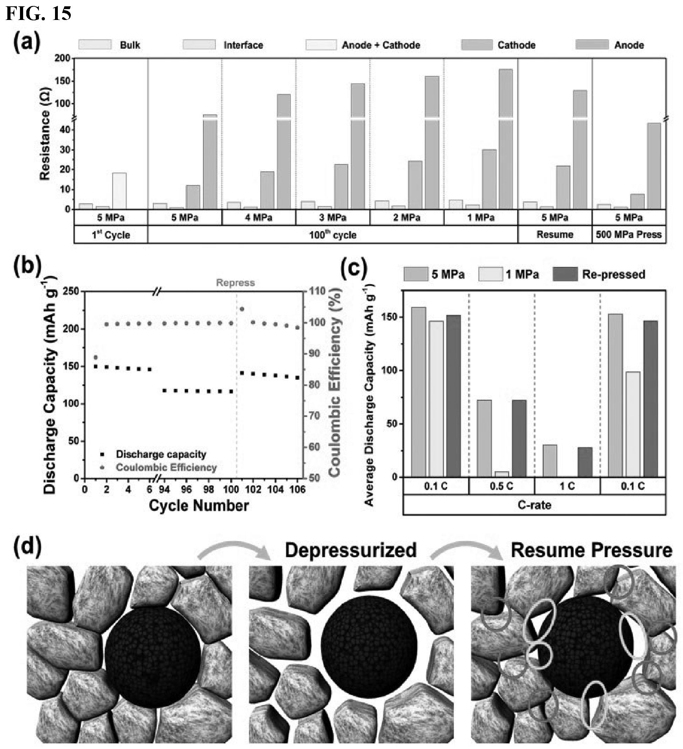

With reference to FIG. 15, (a) is a graph of the EIS results of the ASSPC cycled at 5 MPa after 100 cycles, decreased the pressure to 1 MPa, resume to 5 MPa, and then re-calendered at 500 MPa, (b) is a graph of the capacity retention and CE of the pouch cell cycled at 5 MPa before and after re-calendering, (c) is a graph of the average discharge capacity of the pouch cell having rate test at 1 MPa, re-calendering at 500 MPa, and having another rate test at 5 MPa, and (d) depicts a schematic of the evolution of the contact loss between SSE and cathode when insufficient pressure is applied and could not restore to their original state even the pressure is back to the initial value, where the outer circles label the friction spots and inner circles label the gaps. As depicted, a much higher pressure must be applied to restore the contact between particles.

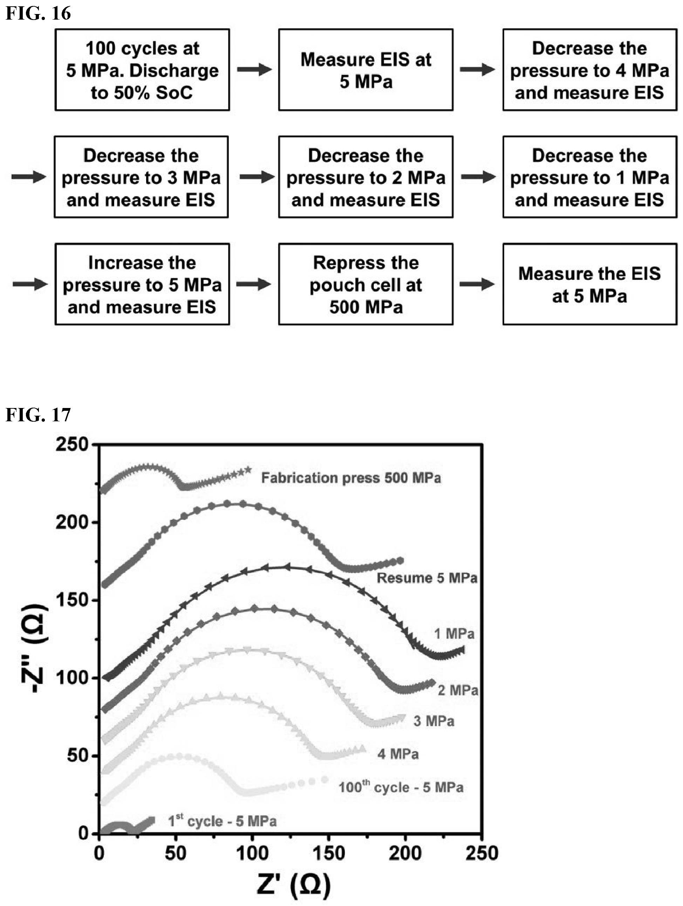

FIG. 16 is a schematic diagram showing the pressurizing process of (a) of FIG. 15. FIG. 17 is an impedance graph of a pouch cell cycled at 5 MPa after 100 cycles, where the applied pressure in the IPCH is decreased from 5 to 1 MPa and then resumed to 5 MPa. After the measurement, a fabrication pressure of 500 MPa can be reapplied to the pouch cell and the EIS can be measured at 5 MPa.

Thus, FIGS. 16 and 17, and Table 5 show the impedance evolution of ASSPCs under pressure change when the ASSPC experiences 100 cycles undergoing a pressure decrease from 5 to 1 MPa, back to 5 MPa, and at last re-calendered at 500 MPa.

Table 5

| ASSPC States | Applied pressure | Bulk | Interface | Cathode | Anode |
|---|---|---|---|---|---|
| 1st cycle | 5 MPa | 2.75 | 1.428 | 18.27 | |
| 100th cycle | 5 MPa | 3.022 | 0.97127 | 12.01 | 76.09 |
| | 4 MPa | 3.574 | 1.21 | 18.93 | 120 |
| | 3 MPa | 3.963 | 1.466 | 22.55 | 144.4 |
| | 2 MPa | 4.199 | 1.755 | 24.2 | 160.8 |
| | 1 MPa | 4.699 | 2.221 | 30.14 | 175.7 |
| Resume 500 MPa press | 5 MPa | 3.758 | 1.321 | 21.86 | 129.5 |
| | 5 MPa | 2.545 | 1.214 | 7.662 | 43.39 |

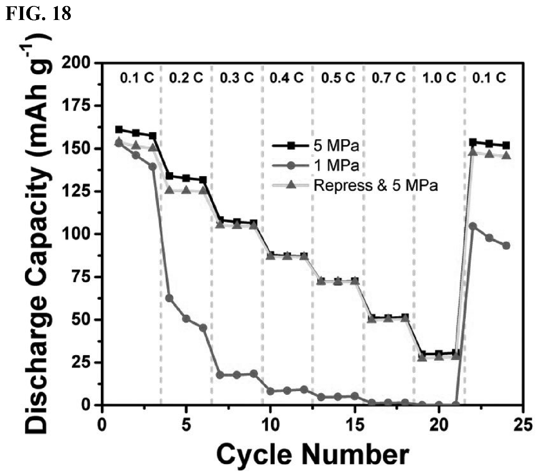

FIG. 18 is a graph of a discharge capacity of an ASSPC cycled at 1 MPa, re-pressurized at 500 MPa and then measured again at 5 MPa. A similar rate capability as an ASSPC cycling at 5 MPa from the beginning can be obtained.

Referring to FIG. 18, as the pressure decreased, the impedance of all the cell components gradually increased. While the impedance of the SSE separator layer increased at a slower rate to 1.7 times, both the impedance of anode and cathode can become approximately 2.5 times when the pressure decreased from 5 MPa to 1 MPa. The impedance of the ASSPC can be not restored even when the pressure resumed 5 MPa. The ASSPC can be re-calendered to understand such a phenomena, and the impedance can be found to decrease dramatically. It can be smaller than the initial state after 100 cycles but larger than in the first cycle. The re-calendered ASSPC can be cycled again, its discharge capacity can also be partially restored from 116.5 mAh g$^{-1}$ in one hundredth cycle to 141.2 mAh g$^{-1}$ in one hundred and first cycle (see also (b) of FIG. 15). To further prove the effect of re-calendering, the ASSPC undergoing rate capability test at 1 MPa can be re-calendered and cycled again at 5 MPa, and the performance can be also almost fully restored, similar to the ASSPC cycled at 5 MPa from the beginning (see also (c) of FIG. 15 and FIG. 18). Schematics using cathode composite as an example illustrating the impedance evolution are shown in (d) of FIG. 15. When the applied pressure decreases, both SSE and cathode particles could undergo elastic deformation and partially expand to their low-pressure state. This creates larger gaps, resulting in worse interfacial contact, and thus increases the cell impedance. Some gaps can be not closed even if the original pressure is reapplied, as the friction between particles needs to be overcome, which requires a larger pressure (re-calender). Nevertheless, the impedance could not be fully restored, as SEI and cathode electrolyte interface (CEI) had formed after a long cycle.

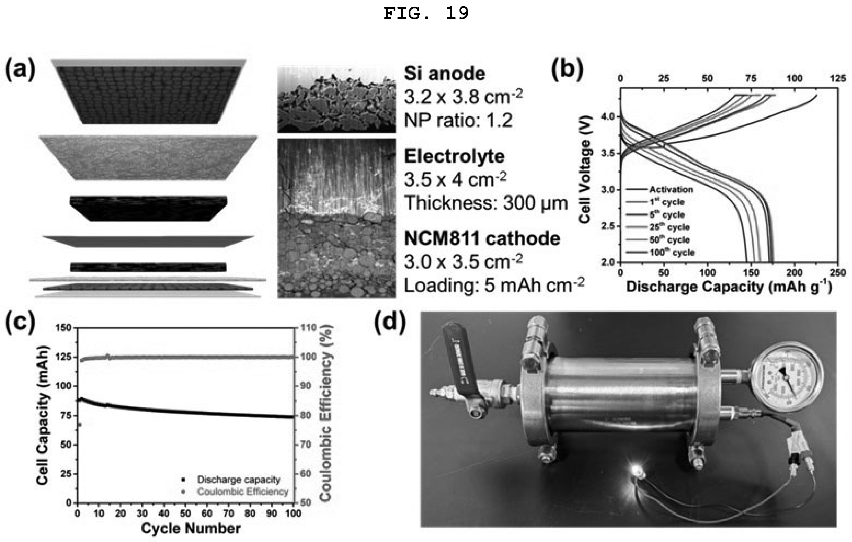

With reference to FIG. 19, (a) is a schematic and a plasma focused ion beam scanning electron microscope (P-FIB SEM) cross section illustrating the bilayer pouch cell configuration, (b) is a graph of voltage profiles of the pouch cell at different cycle numbers, and (c) is a graph of capacity retention of the $3 \times 3.5$ cm$^2$ bilayer ASSPC, and (d) is a picture of a bilayer ASSPC within an IPCH powering an incandescent light bulb with an input rating of 2.5 V - 300 mA at 5 MPa of cycling isostatic press.

With reference to FIG. 19, a bilayer ASSPC can have a total cathode area of 21 cm$^2$ and an areal theoretical capacity of approximately 5 mAh cm$^{-2}$, and can be cycled under 5 MPa at 30°C, 0.1 C. The cell can be stacked in the sequence: Cu - Si - SSE - NCM811 - Al - NCM811 - SSE - Si - Cu. The FIB-SEM cross sectional images and the details of the cell format are as shown in (a) of FIG. 19. The bilayer ASSPC can have an initial Coulombic efficiency of 76.9% and a discharge capacity of 173.6 mAh g$^{-1}$ (88.1 mAh). After 100 cycles, a discharge capacity of 145 mAh g$^{-1}$ can be retained as shown in (b) and (c) of FIG. 19. (d) of FIG. 19 shows a sample of power capability of the bilayer ASSPC by powering an incandescent light with a rating of 2.5 V and 300 mA. When an LED light is used, the forward bias of a small red LEDs can be 2 V which only needs a current as low as 3 mA in some cases. The bilayer ASSPC can be be operated at 3 C. The IPCH can accommodate multiple ASSPCs in its chamber and can have various configurations and shapes.

Cycling pressure is required to maintain good interfacial contacts in ASSBs, and IPCHs can be utilized to provide such cycling pressure via a medium, such as compressed air to apply isostatic pressure to ASSPCs. IPCHs can provide a much more uniform pressure distribution than UPCHs having rigid metal surfaces or flexible rubber gaskets. As fluids do not suffer from material fatigue like many solid elastic materials, the cycling pressure of an IPCH can be stably maintained for a long period of time, and thus a better capacity retention of an ASSPC than that of a UPCH can be obtained over 100 cycles.

As fluids can be employed in the IPCHs, thinner walls can be used to construct IPCHs, and various ASSPC formats with higher energy density can be used. Examples of ASSBs include NCM811 | LPSC1 | Si ASSPCs that can be cycled at various pressures. The minimum required cycling pressure can be as low as 2 MPa to maintain sufficient interfacial contact in the cells, and the cell can be cycled at 1C and can complete 100 cycles at 0.2 C. Rate capability and capacity retention of ASSPCs are positively collated to the cycling pressure. A bilayer ASSPC having a capacity of approximately100 mAh, can be cycled in an IPCH at 0.1 C and completed 50 cycles. The cell can have a discharging at a rate of 3 C (300 mA), but aspects of the present disclosure are not limited thereto. Isostatic cycling of cells can provide a uniform and accurate pressurizing method on commercialization of ASSBs.

In various aspects of the present disclosure, ASSPCS used can be a dry-processed LiNi$_{0.8}$Co$_{0.1}$Mn$_{0.1}$O$_2$ (or NCM811) cathode composite, dry-processed Li$_6$PS$_5$Cl (or LPSCI) SSE separator with slurry-processed Si anode. The NCM811 cathode composite ca be processed by mixing NCM811, LPSCI, vapor grown carbon fiber (VGCF, Sigma-Aldrich) and polytetrafluoroethylene (PTFE) in a mortar and a pestle at a weight ratio of 66 : 31 : 3 : 0.1 until a dough is formed. The dough can then be transferred to a hot roller set at 60°C(TMAXCN) to fabricate films. Shear force can be applied during mixing and rolling to fibrillate PTFE and strengthen the films. A similar procedure can be applied to fabricate LPSCI SSE separator, with a weight ratio of LPSCI : PTFE = 99.9 : 0.1. To prepare $\mu$-Si electrodes, 99.9 wt% $\mu$-Si (Thermofisher) powder and 0.1 wt% PVDF binder can be dispersed in N-Methyl-2-Pyrrolidone (NMP) solvent using a Thinky mixer to create a slurry. The slurry can be casted on a piece of 10 $\mu$m copper foil current collector using a doctor blade on an automatic film coater. The electrode can be vacuum dried at 80°C over a few hours to remove the solvent. The dried electrode can then be punched into suitable shapes to be used for ASSPC fabrication.

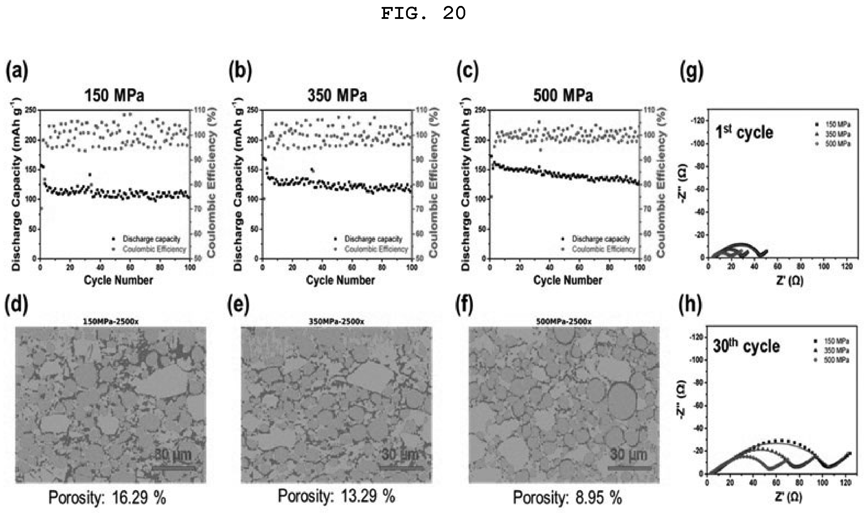

With reference to FIG. 20, shown are graphs of the capacity retention and Coulombic efficiency of pouch cells fabricated using 150 MPa (see (a) of FIG. 20), 350 MPa (see (b) of FIG. 20) and 500 MPa (see (c) of FIG. 20). The segmented FIB cross section images and porosities are shown in (d) to (f) of FIG. 20. Further, (g) of FIG. 20 shows measurements of the 1st cycle of the EIS, and (h) of FIG. 20 shows measurements of the 30th cycle of the EIS.

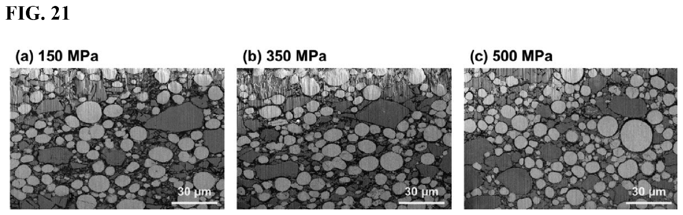

With reference to FIG. 21, shown are images of the P-FIB cross section of NCM811 cathode composite calendered at (a) 150 MPa, (b) 350 MPa and (c) 500 MPa, which correspond to (d), (e) and (f) of FIG. 20, respectively.

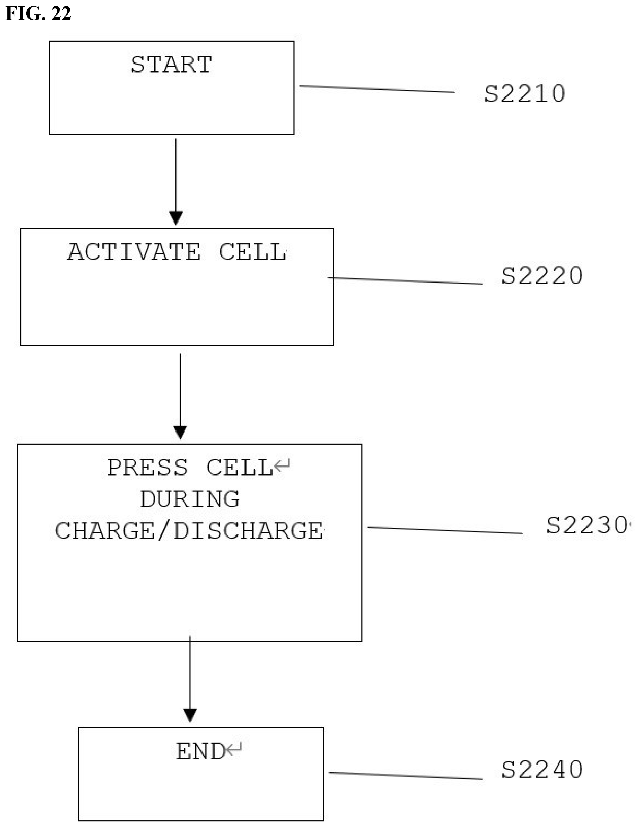

With reference to FIG. 22, a method of using an isostatically pressed cell is provided according to aspects of the present disclosure. Starting from operation S2210, a cell can be activated at operation S2220 once manufactures or formed. Then, at operation S2230, the activated cell can be pressed during use, such as during charging and discharging of the cell. At operation S2240, the method can end. In various aspects of the present disclosure, the cell can be activated and/or pressed using a pouch cell holder, such as the UPCH or the IPCH. In a specific example, in at least one of operations S2220 and S2230, the activation and/or pressing of the cell (including the ASSBs) can be performed by IPCHs.

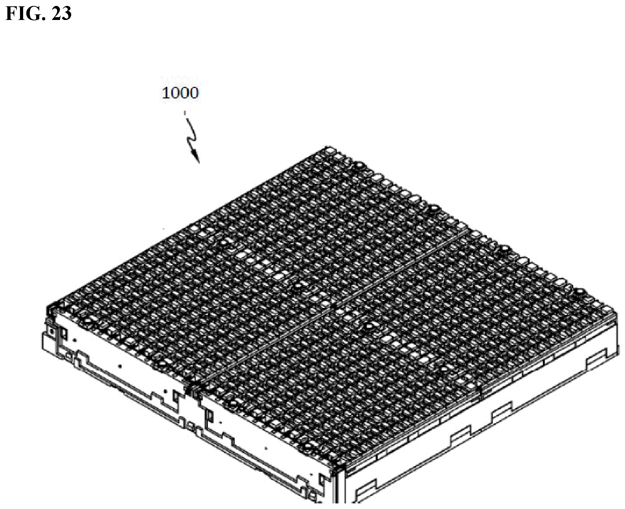

FIG. 23 shows a battery pack 1000 according to an aspect of the present disclosure. The battery pack 1000 can be used with the battery cell pressing device as shown in FIG. 1 and/or FIG. 5. For example, the battery pack 1000 can include the battery cell pressing device as shown in FIG. 1 and/or FIG. 5. Also, the battery pack 1000 can include two or more battery cells.

Cell formats for electrochemical characterization cells and bilayer cells can be as follows. The cell format can include cathode composite films with a dimension of 15 mm x 35 mm x 160 $\mu$m resulting in an areal loading of 4 mAh cm$^{-2}$, SSE separators with a dimension of 18 mm x 40 mm 300 $\mu$m, and Si anode with NP ratio of 1.2 and a dimension of 18 mm x 37 mm. The area of cathode composite films can be the smallest, and can be a capacity limiting component, and SSE separators can be the largest to electronically separate cathodes and anodes. To assemble an electrochemical characterization cell, Cu, Si, LPSCl, NCM811 cathode composite and Al can be stacked from bottom to top and secured with Kapton tape. An Al tab can be welded to the Al current collector as the positive terminal, and a Ni tab to the Cu current collector as the negative terminal, and both terminals can be 4 mm in width. The whole stack can then vacuum sealed in the Al laminated film and calendered using a cold isostatic press.

The ASSPCs calendered at 150, 350 and 500 MPa can be cycled and characterized as shown in FIG. 20 and FIG. 21. Among the pressures, 500 MPa can be used to calendar the ASSPCs for the cycling pressure, and can yield good electrochemical performance. After calendering, cycling pressures can be applied to. In the bilayer cells, cathode composite films can have a dimension of 30 mm x 35 mm x 200 $\mu$m resulting in an areal loading of 5 mAh cm$^{-2}$, SSE separators can have a dimension of 35 mm x 40 mm x 300 $\mu$m, and Si anode can have an NP ratio of 1.2 and a dimension of 35 mm x 37 mm. The components of the bilayer cells can be stacked in a sequence of Cu, Si, LPSCl, NCM811 cathode composite, Al, NCM811 cathode composite, LPSCl, Si, and Cu.

ASSPCs calendered at 150, 350 and 500 MPa can be cycled by 100 cycles at ambient temperature, and can result in fluctuated Coulombic efficiency and capacity retention. Higher capacity retention can be obtained as the fabrication pressure increased, as it increases interfacial contacts. As shown by the P-FIB / SEM cross-sectional images (see FIG. 21), the porosity decreased as the fabrication pressure increased. The EIS at the first and the thirtieth cycle also exhibited decreased cell impedance at higher fabrication pressure, explaining the capacity retention results.

For analysis, Neware A211-BTS-4S-1U-100mA-124 battery cyclers and a Biologic VSP-300 can be employed for galvanostatic cycling and EIS measurements. A voltage cutoff of 2 to 4.3 V can be selected for NCM811 | Si system. As Li diffusivity in pure Si can be improved after lithiation, an activation cycle can be introduced in all protocols. In the activation cycle, ASSPCs can be cycled at 0.05 C for 5 hours, and then completed the whole cycle at 0.1 C. 5 MPa can be applied in the activation cycle and reduced to target pressures afterwards. To obtain accurate cycling, all ASSPCs can be cycled in an oven set at 30° C to study the effect of cycling pressure, but aspects of the present invention are not limited thereto. Other temperatures can be withing the scope of the invention, including temperatures up as low as 100 ° C and as high as 300 ° C. The rate capability test can be conducted by running the ASSPCs at 0.1, 0.2, 0.3, 0.4, 0.5, 0.7, 1 and 0.1 C and each C-rate for 3 cycles under 5 to 1 MPa. In the long-term cycling, ASSPCs can be cycled at 0.2 C and a constant voltage step till 0.05 C can be applied at the end of charging. The ASSPCs can run till 100 cycles and EIS can be obtained in the first and one hundredth cycle at state of charge of 50% during discharging. Z-View software can be used to analyze EIS results. The bilayer ASSPC can be cycled at 0.1 C and a constant voltage step till 0.05 C can be applied at the end of charging.

A Helios G4 PFIB UXe DualBeam plasma focused ion beam / scanning electron microscope (P-FIB / SEM) with a xenon source can be used to obtain the cross section of ASSPCs. After the ASSPCs calendered, they can be disassembled, and their cathode composites can be attached to SEM stubs and sealed in an Ar-filled glovebox. The stubs can then be transferred to P-FIB / SEM within 30 seconds of air exposure. Sample milling can be conducted at 30 kV with a 2.5 $\mu$A current. Afterwards, a lower current (500 and 60 nA) can be used to polish the cross-section. Electron imaging can be conducted at 5 kV and 4 nA beam conditions. To segment the P-FIB / SEM images, they can be imported into the Trainable Weka Segmentation Fiji module to identify NMC811, LPSCl and pores. The segmentation can rely on machine-learning algorithms that are manually trained by the user with the input images. The phase ratios can then be computed in MATLAB. The images of pressure paper can also be processed based on pictures of the pressure papers, the results can be re-scaled in MATLAB using the ratio between the red color and the green and blue colors for each pixel in the jpg files.

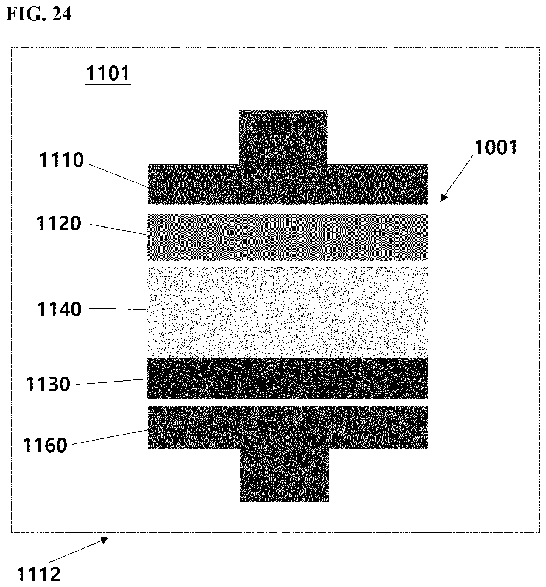

FIG. 24 shows a schematic of a solid-state battery (SSB) according to an aspect of the present disclosure. Various aspects of the solid-state battery (SSB) will be discussed as follows.

Lithium Ion Batteries Generally

A solid-state battery (SSB) can receive a charge and discharge an electrical load various times. A solid-state battery 1101 includes electrodes, such as a cathode electrode 1130 and an anode electrode 1120, and an electrolyte layer 1140 to allow lithium ions to travel between the electrodes. In contrast to conventional liquid electrolyte batteries, the solid-state battery (SSB) does not include any flowable liquids. Forming a circuit between the electrodes causes electricity to flow between the electrodes. During discharging of the lithium ion rechargeable battery, lithium ions are emitted from the cathode electrode and are intercalated into an active material of the anode electrode. During charging of the lithium ion rechargeable battery, lithium ions are emitted from the anode electrode and are intercalated into an active material of the cathode electrode. As lithium ions reciprocate between the electrodes, they transfer energy.

Solid State Battery Configuration

The present disclosure provides a solid-state battery 1101 comprising a cathode electrode 1130, an anode electrode 1120, and a solid electrolyte layer 1140 intermediate the cathode electrode 1130 and the anode electrode 1120. While listed as an example, the solid-state battery 1101 does not require all of these components. For example, in some configurations, such as in an anodeless system, the anode electrode 1120 can be omitted. Alternatively, according to aspects of the disclosure, the anode electrode 1120 can comprise an anode material with a metal carbon composite, such as a silver-carbon blend or composite, where silver particles are complexed between amorphous and/or crystalline carbon particles. While silver is used as an example, other metals can be used, including for example, tin, silicon, zinc, or combinations thereof, but aspects of the present disclosure are not limited thereto.

The solid-state battery 1101 can optionally comprise an additional layer or layers, such as, for example, a separator layer, a protective layer, an inhibitor layer, a solid electrolyte interface layer, or a combination thereof. For example, a protective layer can be incorporated between the electrodes and the solid electrolyte layer. This protective layer can comprise materials such as lithium phosphate, lithium titanate, or lithium lanthanum zirconium oxide (LLZO), which can help prevent undesirable side reactions at the electrode-electrolyte interface. The protective layer can also serve to mitigate dendrite formation, particularly on the anode side, thereby improving the overall cycle life and safety of the battery. A separator layer can also be included in some configurations of the solid-state battery. While traditional liquid electrolyte batteries often use porous polymer separators, solid state batteries can employ thin ceramic or glass-ceramic layers as separators. These separator layers can provide additional mechanical support to the battery structure while still allowing for efficient ion transport. Materials such as LLZO, LATP (lithium aluminum titanium phosphate), or LAGP (lithium aluminum germanium phosphate) can be used for this purpose, but aspects of the present disclosure are not limited thereto. The separator layer can also be designed to have a gradient structure, with properties optimized for contact with both the cathode and anode materials, but aspects of the present disclosure are not limited thereto.

Cell Configuration

FIG. 24 illustrates a solid-state battery 1101 comprising a single cell 1001. In other examples, the solid-state battery 1101 can comprise multiple cells, such as, at least two cells, at least three cells, or at least four cells. Connecting the cells in series increases a voltage of the solid-state battery 1101 and connecting the cells in parallel increases an amp-hour capacity of the solid-state battery 1101. In some embodiments, the solid-state battery 1101 can be configured with a combination of series and parallel connections to achieve desired voltage and capacity characteristics. For example, multiple cells can be arranged in groups, with cells within each group connected in parallel to increase capacity, and these groups then connected in series to increase voltage. This configuration, sometimes referred to as a series-parallel arrangement, allows for greater flexibility in battery design and can help optimize performance for specific applications. Additionally, the number and arrangement of cells can be adjusted to meet various form factor requirements.

Thickness of Cell

A thickness, $t_1$, of the cell 1001 can be 100, 150, 200, 250, 300, 400, 500, 1,000 $\mu$m, 2,000 $\mu$m, or 5,000 $\mu$m. In embodiments, the thickness, $t_1$, of the cell 1001 can be within a range formed by selecting any two numbers listed in the immediately previous sentence, e.g., between 100 $\mu$m and 5,000 $\mu$m or 100 $\mu$m and 1,000 $\mu$m, but aspects of the present disclosure are not limited thereto.

Cathode Electrode Generally

The cathode electrode 1130 is associated with one polarity (e.g., positive) of the solid-state battery 1101. The cathode electrode 1130 is configured as a positive electrode during discharge of the solid-state battery 1101. The cathode electrode 1130 is suitable for lithium ion diffusion between a current collector 1160 and the solid electrolyte layer 106. The cathode electrode 1130 is in electrical communication with the current collector 1160. In embodiments, the cathode electrode 1130 is formed over and in direct contact with the current collector 1160. In other embodiments, another functional layer can be interposed between the cathode electrode 1130 and the current collector 1160, but aspects of the present disclosure are not limited thereto.

Material for the Cathode Electrode

The cathode electrode 1130 can be capable of reversible intercalation and deintercalation of lithium ions. For example, the cathode electrode 1130 can comprise one or more of a cathode active material, a conductive carbon, a solid electrolyte material, a binder, the like, or combinations thereof. Optionally, the cathode electrode 1130 can further comprise an additive, such as, for example, an oxidation stabilizing agent, a reduction stabilizing agent, a flame retardant, a heat stabilizer, an antifogging agent, a thickener, the like, or a combination thereof, but aspects of the present disclosure are not limited thereto. Examples of these additives can include butylated hydroxyanisole (BHA) or butylated hydroxytoluene (BHT) as oxidation stabilizing agents, ascorbic acid or sodium sulfite as reduction stabilizing agents, aluminum hydroxide or magnesium hydroxide as flame retardants, phenolic compounds or phosphites as heat stabilizers, polyethylene glycol or silica nanoparticles as antifogging agents, and carboxymethyl cellulose (CMC) or xanthan gum as thickeners, but aspects of the present disclosure are not limited thereto.

Material for the Cathode Active Material

The cathode active material can include lithium cobalt oxide ($LiCoO_2$), lithium nickel oxide ($LiNiO_2$), $Li[Ni_aCo_bMn_cM^1{}_d]O_2$ (wherein $M^1$ is any one element elected from the group consisting of Al, Ga, In, or a combination thereof, $0.3 \leq a < 1.0$, $0 \leq b \leq 0.5$, $0 \leq c \leq 0.5$, $0 \leq d \leq 0.1$, and $a+b+c+d=1$), $Li(Li_eM^2{}_{f-e-f}M^3{}_f)O_{2-g}A_g$ (wherein $0 \leq e \leq 0.2$, $0.6 \leq f \leq 1$, $0 \leq f' \leq 0.2$, $0 \leq g \leq 0.2$, $M^2$ includes Mn and at least one element selected from the group consisting of Ni, Co, Fe, Cr, V, Cu, Zn and Ti, $M^3$ is at least one element selected from the group consisting of Al, Mg and B, and A is at least one element selected from the group consisting of P, F, S and N), or those compounds substituted with one or more transition metals; lithium manganese oxides such as those represented by the chemical formula of $Li^{1+h}Mn_{2-h}O_4$ (wherein $0 \leq h \leq 0.33$), $LiMnO_3$, $LiMn_2O_3$, $LiMnO_2$, or the like; lithium copper oxide ($Li_2CuO_2$); vanadium oxides such as $LiV_3O_8$, $V_2O_5$ or $Cu_2V_2O_7$; Ni-site type lithium nickel oxides represented by the chemical formula of $LiNi_{1-i}M^4{}_iO_2$ (wherein $M^4$=Co, Mn, Al, Cu, Fe, Mg, B or Ga, and $0.01 \leq y \leq 0.3$); lithium manganese composite oxides represented by the chemical formula of $LiMn_{2-j}M^5{}_jO_2$ (wherein $M^5$=Co, Ni, Fe, Cr, Zn, or Ta, and $0.01 \leq y \leq 0.1$) or $Li_2Mn_3M^6O_8$ (wherein $M^6$=Fe, Co, Ni, Cu, or Zn); $LiMn_2O_4$ in which Li is partially substituted with an alkaline earth metal ion; disulfide compounds; $LiFe_3O_4$, $Fe_2(MoO_4)_3$; the like; or combinations thereof, but aspects of the present disclosure are not limited thereto.

In addition to the cathode active materials previously mentioned, the cathode electrode can include other types of materials. For example, lithium iron phosphate ($LiFePO_4$) can be used as a cathode active material due to its excellent thermal stability and long cycle life. Other phosphate-based materials such as lithium manganese iron phosphate ($LiMnxFe1-xPO_4$) or lithium cobalt phosphate ($LiCoPO_4$) can also be suitable, but aspects of the present disclosure are not limited thereto.

The cathode active material can also include layered oxide materials with various compositions, such as $Li(Ni1-x-yCoxMny)O_2$ (NCM) or $Li(Ni1-x-yCoxAly)O_2$ (NCA), where the ratios of Ni, Co, Mn, and Al can be adjusted to optimize performance characteristics. For instance, NCM materials with high nickel content, such as NCM811 ($LiNi_{0.8}Co_{0.1}Mn_{0.1}O_2$), can be used to achieve higher energy density. In some cases, the cathode active material can comprise spinel structures like $LiNi_{0.5}Mn_{1.5}O_4$, which can offer high voltage operation. Alternatively, materials with tavorite structures, such as $LiFeSO_4F$ or $LiVPO_4F$, can be employed for their potential for high energy density and good thermal stability, but aspects of the present disclosure are not limited thereto.

Composite or blended cathode materials, combining two or more active materials, can also be used. For example, a blend of layered oxides and spinel materials might be employed to balance energy density and power capability. As another example, lithium iron phosphate can be blended with one or more of the cathode active materials described above. In some embodiments, the cathode active material can include surface-modified versions of the aforementioned compounds, where the surface modification aims to improve stability, conductivity, or other performance metrics, but aspects of the present disclosure are not limited thereto.

The cathode active material can also include emerging classes of materials such as disordered rock salt structures (e.g., $Li_3NbO_4$-based materials) or high-entropy oxides, which can offer unique combinations of high capacity and structural stability. In some cases, the cathode active material can incorporate dopants or substitutional elements to further tune its electrochemical properties, but aspects of the present disclosure are not limited thereto.

Particulate Nature of the Cathode Active Material

The cathode active material can be particle shaped. The cathode active material can comprise a particle size of 10 nm, 20 nm, 30 nm, 50 nm, 70 nm, 100 nm, 200 nm, 300 nm, 400 nm, 500 nm, 1,000 nm, 10 μm, 20 μm, 30 μm, 50 μm, 70 μm, 100 μm, 200 μm, 300 μm, 400 μm, 500 μm, or 1,000 μm. In embodiments, particle size of the cathode active material can be within a range formed by selecting any two numbers listed in the immediately previous sentence, e.g., between 10 nm and 1,000 μm. Gaps between cathode active material in the cathode electrode 1130 can be filled with the solid electrolyte material, but aspects of the present disclosure are not limited thereto.

Amount of the Cathode Active Material in the Cathode Electrode

The amount of the cathode active material in the solid-state battery 1101 affects the charge and discharge capacity of the solid-state battery 1101. In order to manufacture a high-capacity cathode electrode 1130, a high level of cathode active material can be included in the cathode electrode 1130. For example, the cathode electrode 1130 includes at, about, or greater than 30, 40, 50, 60, 70, 80, 90, 95, or 98 wt% of cathode active material based on the total weight of the cathode electrode 1130. In embodiments, cathode active material in the cathode electrode 1130 can be within a range formed by selecting any two numbers listed in the immediately previous sentence, e.g., between 40 wt% and 98 wt%, but aspects of the present disclosure are not limited thereto.

Material for the Conductive Material in the Cathode Electrode

The conductive material in the cathode electrode 1130 is not particularly limited, as long as it has conductivity while not causing any chemical change in the corresponding solid-state battery 1101. For example, the conductive material can comprise graphite, such as natural graphite or artificial graphite; carbon black, such as acetylene black, ketjen black, channel black, furnace black, lamp black or thermal black; conductive fibers, such as carbon fibers or metal fibers; carbon nanotubes (CNT), including both singled-walled carbon nanotubes (SWCNT) and multi-walled carbon nanotubes (MWCNT) ; fluorocarbon powder; metal powder, such as aluminum or nickel powder; conductive whiskers, such as zinc oxide or potassium titanate; conductive metal oxides, such as titanium oxide; conductive materials, such as polyphenylene derivatives; the like; or combinations thereof. Other conductive materials that can be used in the cathode electrode 1130 include graphene and its derivatives, such as reduced graphene oxide (rGO) or graphene nanoplatelets, but aspects of the present disclosure are not limited thereto. These two-dimensional carbon materials offer high surface area and excellent electrical conductivity. Conductive polymers, such as polyaniline (PANI), polypyrrole (PPy), or poly(3,4-ethylenedioxythiophene) (PEDOT), can also be employed to enhance the electrode's conductivity while potentially improving its mechanical properties. In some cases, hybrid conductive additives combining different materials, such as CNT-graphene composites or metal-coated carbon materials, can be used to synergistically improve the overall conductivity and performance of the cathode electrode 1130, but aspects of the present disclosure are not limited thereto.

Amount of Conductive Material in the Cathode Electrode

The cathode electrode 1130 includes at or 1, 2, 5, 10, 15, 20, 25, or 30 wt% of conductive material based on the total weight of the cathode electrode 1130. In embodiments, conductive material in the cathode electrode 1130 can be within a range formed by selecting any two numbers listed in the immediately previous sentence, e.g., between 1 wt% and 30 wt%, but aspects of the present disclosure are not limited thereto.

Material for the Binder

The binder can comprise various types of binder polymers, such as, for example, polyvinylidene fluoride-co-hexafluoropropylene (PVdF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylate, ethylene-propylene-diene monomer (EPDM), sulfonated EPDM, styrene butadiene rubber (SBR), fluororubber, polyacrylic acid, polymers thereof whose hydrogen atoms are substituted with Li, Na or Ca, various copolymers thereof, the like, or combinations thereof, but aspects of the present disclosure are not limited thereto. In addition to the binder materials previously mentioned, other types of binder materials can be used in the cathode electrode to enhance its performance and stability. For instance, water-soluble binders such as sodium alginate, gelatin, or polyacrylamide can be employed to improve the environmental friendliness of the electrode manufacturing process. These binders can also offer advantages in terms of electrode flexibility and adhesion strength. In some cases, conductive binders like poly(3,4-ethylenedioxythiophene):poly(styrene sulfonate) (PEDOT:PSS) or polyaniline (PANI) can be used to simultaneously improve both the mechanical integrity and electrical conductivity of the electrode. Novel binder systems, such as self-healing polymers or supramolecular assemblies, can be incorporated to enhance the long-term stability and cycle life of the battery. Additionally, composite binders combining multiple polymers or incorporating inorganic nanoparticles can be utilized to tailor the mechanical, thermal, and electrochemical properties of the electrode. In some embodiments, bio-derived or biodegradable binders, such as cellulose derivatives or chitosan, can be employed to reduce the environmental impact of battery production and disposal, but aspects of the present disclosure are not limited thereto.

Amount of Binder in the Cathode Electrode

The cathode electrode 1130 includes at or 1, 2, 5, 10, 15, 20, 25, or 30 wt% of binder based on the total weight of the cathode electrode 1130. In embodiments, binder in the cathode electrode 1130 can be within a range formed by selecting any two numbers listed in the immediately previous sentence, e.g., between 1 wt% and 30 wt%, but aspects of the present disclosure are not limited thereto.

Material for Solid Electrolyte Material

The solid electrolyte material in the cathode electrode 1130 can be individually configured the same as the material for the solid electrolyte layer 106 discussed below. The solid electrolyte material in the cathode electrode 1130 can be the same or different than the material for the solid electrolyte layer 106.

Amount of Solid Electrolyte Material in Cathode Electrode

The cathode electrode 1130 includes 1, 2, 5, 10, 15, 20, 25, or 30 wt% of solid electrolyte material based on the total weight of the cathode electrode 1130. In embodiments, the amount of solid electrolyte material in the cathode electrode 1130 can be within a range formed by selecting any two numbers listed in the immediately previous sentence, e.g., between 1 wt% and 30 wt%, but aspects of the present disclosure are not limited thereto.

Thickness of Cathode Electrode

A thickness, $t_2$, of the cathode electrode 1130 can be 10, 20, 50, 100, 150, 200, 250, 300, 400, 500, or 1,000 $\mu$m. In embodiments, the thickness, $t_2$, of the cathode electrode 1130 can be within a range formed by selecting any two numbers listed in the immediately previous sentence, e.g., between 10 $\mu$m and 1,000 $\mu$m, but aspects of the present disclosure are not limited thereto.

Porosity of Cathode Electrode

A porosity of the cathode electrode 1130 can be 0, 1, 2 3, 4, 5, 6, 7, 8, 9, 10, 11, 12, 13, 14, 15, 16, 17, or 18 vol% based on the total volume of the cathode electrode 1130. In embodiments, the porosity of the cathode electrode 1130 can be within a range formed by selecting any two numbers listed in the immediately previous sentence, e.g., between 0 vol% and 18 vol%, but aspects of the present disclosure are not limited thereto.

Lithium Ion Diffusivity of the Cathode Electrode

The cathode electrode 1130 can include a lithium ion diffusivity of at or $1 \times 10^{-14}$ cm$^2$/s, $1 \times 10^{-13}$ cm$^2$/s, $1 \times 10^{-12}$ cm$^2$/s, $1 \times 10^{-11}$ cm$^2$/s, $1 \times 10^{-10}$ cm$^2$/s, $1 \times 10^{-9}$ cm$^2$/s, $1 \times 10^{-8}$ cm$^2$/s, or $1 \times 10^{-7}$ cm$^2$/s. In embodiments, the lithium ion diffusivity of the cathode electrode 1130 can be within a range formed by selecting any two numbers listed in the immediately previous sentence, e.g., between $1 \times 10^{-14}$ cm$^2$/s and $1 \times 10^{-7}$ cm$^2$/s, but aspects of the present disclosure are not limited thereto.

Current Collector at the Cathode Electrode

The current collector 1160 collects electrical energy generated at the cathode electrode 1130 and supports the cathode electrode 1130. The material of the current collector 1160 is not particularly limited as long as it allows adhesion of the cathode electrode 1130, has a suitable electrical conductivity, and does not cause significant chemical changes in the corresponding solid-state battery 1101 in the voltage range of the solid-state battery 1101. For example, the current collector 1160 is made of or includes various materials, such as, a metal, a conductive carbon, or a conductive ceramic, although not limited thereto. The metal of the current collector 1160 can include one or more selected from the group consisting of aluminum, an aluminum alloy, copper, a copper alloy, nickel, a nickel alloy, titanium, a titanium alloy, iron, an iron alloy (e.g., steel, stainless steel), silver, a silver alloy, gold, platinum, palladium, chromium, molybdenum, tungsten, tantalum, niobium, zirconium, vanadium, manganese, cobalt, indium, tin, lead, bismuth, or a combination thereof, although not limited thereto.

Shape and Size of the Current Collector at the Cathode Electrode

It is possible to increase the adhesion of the cathode electrode 1130 to the current collector 1160 by forming fine surface irregularities on the surface of the current collector 1160. The current collector 1160 can have various shapes, such as, for example, a film, a sheet, a foil, a net, a porous body, a foam, a non-woven web body, the like, or combinations thereof, but aspects of the present disclosure are not limited thereto. The current collector 1160 can also be configured in various other geometries to optimize its performance and integration with the cathode electrode 1130, and can be sized for specific form factors, such as pouch, cylindrical, and/or prismatic form factors. For instance, the current collector 1160 can be structured as a mesh or grid, which can provide enhanced mechanical support while maintaining high surface area for electrode adhesion. In some embodiments, the current collector 1160 can be designed with a corrugated or wavy pattern, potentially increasing the contact area with the cathode material and improving overall conductivity. The current collector 1160 can also be fabricated as a perforated sheet, allowing for better electrolyte penetration and ion transport. In certain cases, the current collector 1160 can be formed as a three-dimensional structure, such as an interconnected network of fibers or a honeycomb-like configuration, which could enhance the structural integrity of the electrode assembly while facilitating efficient current collection, but aspects of the present disclosure are not limited thereto.

Thickness of Current Collector at the Cathode Electrode

A thickness, $t_3$, of the current collector 1160 can be 3, 5, 10, 15, 20, 25, 50, 100, 150, 200, 300, 400, or 500 $\mu$m. In embodiments, the thickness, $t_3$, of the current collector 1160 can be within a range formed by selecting any two numbers listed in the immediately previous sentence, e.g., between 5 $\mu$m and 500 $\mu$m.

Manufacturing Method for the Cathode Electrode

The cathode electrode 1130 can be obtained by various methods. For example, the cathode active material can be mixed and agitated with a solvent, and optionally a binder, conductive material, and a dispersing agent to form slurry. Then, the slurry can be applied (e.g., coated) onto the current collector 1160, followed by pressing and drying, to obtain the cathode electrode 1130, but aspects of the present disclosure are not limited thereto.

In addition to the slurry-based method described, the cathode electrode 1130 can be manufactured using various other techniques. For instance, a dry powder coating process can be employed, where the cathode active material, conductive additives, and binder are mixed in a dry state and then directly applied to the current collector 1160 using electrostatic deposition or mechanical compression. This method can reduce environmental impact by eliminating the need for solvents.

In some cases, the cathode electrode 1130 can be fabricated using additive manufacturing techniques such as 3D printing. This approach allows for precise control over the electrode structure and porosity, potentially enhancing the electrode's performance and energy density. Various 3D printing methods, including fused deposition modeling (FDM), selective laser sintering (SLS), or direct ink writing (DIW), can be utilized depending on the specific materials and desired electrode properties.

Another method for manufacturing the cathode electrode 1130 can involve electrospinning. In this process, a solution containing the cathode active material, conductive additives, and a polymer binder is extruded through a nozzle under an electric field, resulting in the formation of nanofibers. These fibers can be collected directly on the current collector 1160 to form a highly porous electrode structure with increased surface area.

In some embodiments, the cathode electrode 1130 can be prepared using a tape casting method. This technique involves spreading a slurry of electrode materials onto a moving carrier film using a doctor blade, followed by drying and calendering. The resulting electrode tape can then be laminated onto the current collector 1160.

Alternatively, the cathode electrode 1130 can be fabricated using a spray coating technique. In this method, a fine mist of the electrode slurry is sprayed onto the current collector 1160 using compressed air or ultrasonic atomization. This approach can allow for the creation of thin, uniform electrode layers and can be particularly useful for large-scale production.

In certain cases, the cathode electrode 1130 can be manufactured using a freeze-casting method. This process involves freezing a slurry of electrode materials, followed by sublimation of the ice to create a porous structure. The resulting porous electrode can then be sintered and attached to the current collector 1160.

For some applications, the cathode electrode 1130 can be prepared using a sol-gel process. This method involves the formation of a colloidal suspension (sol) that is then converted into a gel-like network containing the cathode active material and other components. The gel can be applied to the current collector 1160 and subsequently heat-treated to form the final electrode structure.

Application Methods for the Slurry for the Cathode Electrode

The application of the slurry to the cathode electrode 1130 can include using a technique selected from the group consisting of slot die coating, gravure coating, spin coating, spray coating, roll coating, curtain coating, extrusion, casting, screen printing, inkjet printing, spray printing, gravure printing, heat transfer printing, a Toppan printing method, intaglio printing, offset printing, the like, and combinations thereof. In some embodiments, the cathode electrode 1130 can be fabricated using a double layer slot die coating (DLD) technique. This method involves the simultaneous application of two distinct layers of electrode materials onto the current collector 1160 in a single pass. The DLD process can allow for the creation of gradient structures within the electrode, potentially optimizing both the electrochemical performance and mechanical properties of the cathode. Additionally, this technique can enable the incorporation of functional interlayers or protective coatings as part of the electrode manufacturing process, potentially enhancing the overall battery performance and longevity

Solvent for the Slurry for the Cathode Electrode

The solvent for forming the cathode electrode 1130 can include water and/or an organic solvent, such as, for example, N-methyl pyrrolidone (NMP), dimethyl formamide (DMF), acetone, dimethyl acetamide, dimethyl sulfoxide (DMSO), isopropyl alcohol, the like, or combinations thereof. The solvent can be used in an amount sufficient to dissolve and disperse the electrode ingredients, such as the cathode active material, binder, and conductive material, considering the slurry coating thickness, production yield, the like, or combinations thereof. Additional solvents that can be used include ethanol, methanol, propanol, butanol, ethyl acetate, methyl ethyl ketone, tetrahydrofuran, diethyl ether, and toluene. In some aspects of the disclosure, the cathode electrode 1130 can be prepared using a solvent-free method, such as dry powder processing or melt extrusion, which eliminates the need for liquid solvents and can offer environmental and cost benefits, but aspects of the present disclosure are not limited thereto.

Dispersing Agent for the Slurry for the Cathode Electrode

The dispersing agent forming the cathode electrode 1130 can include an aqueous dispersing agent and/or an organic dispersing agent, such as, for example, N-methyl-2-pyrrolidone. Other possible dispersing agents can include polyvinylpyrrolidone (PVP), carboxymethyl cellulose (CMC), sodium dodecyl sulfate (SDS), Triton X-100, polyethylene glycol (PEG), polyacrylic acid (PAA), and various surfactants such as polysorbates or poloxamers, but aspects of the present disclosure are not limited thereto.

Drying Technique for the Cathode Electrode

The slurry for the cathode electrode 1130 can be dried by irradiating heat, electron beams (E-beams), gamma rays, or UV (G, H, I-line), the like, or combinations thereof, to vaporize the solvent. For example, the slurry can be vacuum dried at room temperature. Although the solvent is removed through evaporation by the drying step, the other ingredients do not evaporate and remain as they are to form the cathode electrode 1130. In addition to the drying techniques mentioned, the cathode electrode 1130 can be dried using other methods such as infrared (IR) drying, microwave drying, or freeze-drying. In some embodiments, a combination of drying techniques can be employed, such as using convection heating followed by vacuum drying, to optimize the drying process and ensure complete solvent removal while maintaining the integrity of the electrode structure, but aspects of the present disclosure are not limited thereto.

Anode Electrode Generally

The anode electrode 1120 is associated with one polarity (e.g., negative) of the solid-state battery 1101, which is different than the polarity of the cathode electrode 1130. The anode electrode 1120 is configured as a negative electrode during discharge of the solid-state battery 1101. The anode electrode 1120 is suitable for lithium ion diffusion between a current collector 1110 and the solid electrolyte layer 106. The anode electrode 1120 is in electrical communication with the current collector 1110. In embodiments, the anode electrode 1120 is formed over and in direct contact with the current collector 1110. In some embodiments, as explained above, the solid-state battery 1101 can utilize an anodeless electrode system. In such configurations, the anode electrode 1120 can be omitted, and lithium metal can be deposited directly onto the current collector 1110 during charging. This approach can potentially increase the energy density of the battery by eliminating the need for a separate anode material, while also potentially reducing the overall thickness of the battery structure.

Material for the Anode Electrode

The anode electrode 1120 can be capable of reversible intercalation and deintercalation of lithium ions. For example, the anode electrode 1120 can comprise an anode active material, a binder, the like, or combinations thereof. Optionally, the anode electrode 1120 can further comprise an additive, such as, for example, an oxidation stabilizing agent (e.g., butylated hydroxyanisole, butylated hydroxytoluene, propyl gallate, tert-butylhydroquinone), a reduction stabilizing agent (e.g., ascorbic acid, sodium sulfite, erythorbic acid, sodium metabisulfite), a flame retardant (e.g., aluminum hydroxide, magnesium hydroxide, ammonium polyphosphate, melamine cyanurate), a heat or light stabilizer (e.g., phenolic compounds, phosphites, hindered amine light stabilizers, UV absorbers like benzophenones or benzotriazoles), an antifogging agent (e.g., polyethylene glycol, silica nanoparticles, glycerol, sorbitol), a thickener (e.g., carboxymethyl cellulose, xanthan gum), the like, or a combination thereof. Additionally, conductive additives such as carbon black, graphene, or carbon nanotubes can be incorporated to enhance electrical conductivity, while binder modifiers like styrene-butadiene rubber or polyacrylic acid can improve adhesion and mechanical stability. Functional additives such as fluoroethylene carbonate or vinylene carbonate can also be included to promote the formation of a stable solid electrolyte interphase layer on the anode surface, but aspects of the present disclosure are not limited thereto.

Material for the Anode Active Material

The anode active material is made of or includes various materials, such as, for example, an alkali metal, an alkaline earth metal, a group 3B metal, a transition metal, a metalloid, an alloy thereof, a conductive carbon, the like, or a combination thereof, although not limited thereof. In embodiments, the anode active material can comprise silicon, a silicon alloy, lithium, a lithium alloy, a conductive carbon, or a combination thereof, although not limited thereto. In embodiments, the lithium alloy is made of or includes a lithium alloy comprising silicon, chlorine, or a combination thereof. The anode active material can include carbon-based material such as artificial graphite, natural graphite, graphitized carbon fiber, amorphous carbon or the like; a metallic material capable of alloying with lithium such as Si, Al, Sn, Pb, Zn, Bi, In, Mg, Ga, Cd, a Si alloy, a Sn alloy, an Al alloy, or the like; a metal oxide capable of doping and dedoping lithium ions such as $SiO_x$ (0<x<2), $SnO_2$, vanadium oxide or lithium vanadium oxide; and a composite including the metallic material and the carbon-based material such as a Si-C composite or a Sn-C composite. A lithium metal thin film can be used as the anode active material. The carbon-based material can include low-crystallinity carbon, high-crystallinity carbon, the like, or combinations thereof. A representative example of low-crystallinity carbon is soft carbon or hard carbon, and a representative example of the high-crystallinity carbon is high-temperature calcined carbon such as amorphous, platy, flaky, spherical or fibrous natural graphite or artificial graphite, kish graphite, pyrolytic carbon, mesophase pitch-based carbon fiber, meso-carbon microbeads, mesophase pitches, petroleum or coal tar pitch-derived coke, the like, or combinations thereof. In addition to the materials mentioned, the anode active material can also include titanium-based compounds such as lithium titanate ($Li_4Ti_5O_{12}$) or titanium dioxide ($TiO_2$), which can offer excellent cycling stability and high-rate capability. Other potential materials can include transition metal oxides like molybdenum oxides (MoOx), iron oxides (FeOx), or nickel oxides (NiOx), which can provide high theoretical capacities. In some cases, composite materials combining different active materials, such as silicon-graphite composites or tin-carbon composites, can be used to leverage the advantages of multiple materials while mitigating their individual limitations, but aspects of the present disclosure are not limited thereto.

Dendrite Formation

When the anode electrode 1120 is made of or includes lithium or a lithium alloy, dendrites can form on the anode electrode 1120. The dendrites are a metallic lithium structure formed when extra lithium ions accumulate on a surface of the anode electrode 1120. The formed dendrites can damage the solid electrolyte layer 106, reduce battery capacity of the solid-state battery 1101, and/or otherwise lead to undesired performance of the solid-state battery 1101. Dendrite formation is a significant challenge in lithium-based batteries, as these structures can grow through the electrolyte, potentially causing short circuits and safety hazards. The growth rate and morphology of dendrites can be influenced by factors such as current density, temperature, and the nature of the electrolyte-electrode interface.

Solid electrolytes offer several advantages over liquid electrolytes when it comes to mitigating dendrite formation. The mechanical strength of solid electrolytes can help suppress dendrite growth by providing a physical barrier to lithium metal penetration. Additionally, the uniform ion distribution in solid electrolytes can promote more even lithium deposition, reducing the likelihood of localized dendrite nucleation. Some solid electrolytes can also form a stable interface with the lithium metal anode, further inhibiting dendrite formation. However, it is important to note that while solid electrolytes can significantly reduce the risk of dendrite growth, they can be not completely eliminate it, and ongoing research aims to develop advanced solid electrolyte materials with enhanced dendrite suppression capabilities.

Nature of the Anode Active Material

The anode active material can be particle shaped or it can be a continuous, unitary form (e.g., a thin film or sheet). In embodiments where the anode active material is particle shaped, the anode active material can comprise a particle size of 10 nm, 20 nm, 30 nm, 50 nm, 70 nm, 100 nm, 200 nm, 300 nm, 400 nm, 500 nm, 1,000 nm, 10 μm, 20 μm, 30 μm, 50 μm,

70 $\mu$m, 100 $\mu$m, 200 $\mu$m, 300 $\mu$m, 400 $\mu$m, 500, or 1,000 $\mu$m. In embodiments, particle size of the anode active material can be within a range formed by selecting any two numbers listed in the immediately previous sentence, e.g., between 10 nm and 1,000 $\mu$m, but aspects of the present disclosure are not limited thereto.

Amount of Anode Active Material in the Anode Electrode

The amount of the anode active material in the solid-state battery 1101 affects the charge and discharge capacity of the solid-state battery 1101. In order to manufacture a high-capacity anode electrode 1120, a high level of anode active material can be included in the anode electrode 1120. For example, the anode electrode 1120 includes at, about, or greater than 70, 80, 90, 95, 98, 99, or 100 wt% of anode active material based on the total weight of the anode electrode 1120. In embodiments, anode active material in the anode electrode 1120 can be within a range formed by selecting any two numbers listed in the immediately previous sentence, e.g., between 70 wt% and 100 wt%, but aspects of the present disclosure are not limited thereto.

Material for Binder in the Anode Electrode

The binder can comprise various types of binder polymers, such as, for example, polyvinylidene fluoride-co-hexafluoropropylene (PVdF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylate, ethylene-propylene-diene monomer (EPDM), sulfonated EPDM, styrene butadiene rubber (SBR), fluororubber, polyacrylic acid, polymers thereof whose hydrogen atoms are substituted with Li, Na or Ca, various copolymers thereof, the like, or combinations thereof. In addition to the binders mentioned, other suitable binders for use in the anode electrode can include polyimide, polyamide-imide, polyurethane, polyethylene oxide (PEO), poly(ethylene-co-vinyl acetate) (PEVA), poly(vinyl acetate) (PVA), alginate, chitosan, guar gum, xanthan gum, carrageenan, pectin, gelatin, lignin, and various water-soluble polymers or their derivatives. In some cases, conductive polymers such as polypyrrole, polyaniline, or poly(3,4-ethylenedioxythiophene) (PEDOT) can also be used as binders to simultaneously improve adhesion and electrical conductivity within the anode electrode, but aspects of the present disclosure are not limited thereto.

Amount of Binder in the Anode Electrode

The anode electrode 1120 can include at or 0, 1, 2, 5, 10, 15, 20, 25, or 30 wt% of binder based on the total weight of the anode electrode 1120. In embodiments, binder in the anode electrode 1120 can be within a range formed by selecting any two numbers listed in the immediately previous sentence, e.g., between 0 wt% and 30 wt%, but aspects of the present disclosure are not limited thereto.

Thickness of the Anode Electrode

The anode electrode 1120 can be 10, 20, 30 50, 60, 70, or 100 $\mu$m thick. In embodiments, the thickness, $t_4$, of the anode electrode 1120 can be within a range formed by selecting any two numbers listed in the immediately previous sentence, e.g., between 10 $\mu$m and 100 $\mu$m or 10 $\mu$m and 20 $\mu$m, but aspects of the present disclosure are not limited thereto.

Porosity of Anode Electrode

A porosity of the anode electrode 1120 can be 0, 1, 2, 3, 4, 5, 6, 7, 8, 9, 10, 11, 12, 13, 14, 15, 16, 17, or 18 vol% based on the total volume of the anode electrode 1120. In embodiments, the porosity of the anode electrode 1120 can be within a range formed by selecting any two numbers listed in the immediately previous sentence, e.g., between 0 vol% and 18 vol%, but aspects of the present disclosure are not limited thereto.

Lithium Ion Diffusivity of the Anode Electrode

The anode electrode 1120 can include a lithium ion diffusivity of $1 \times 10^{-14}$ cm$^2$/s, $1 \times 10^{-13}$ cm$^2$/s, $1 \times 10^{-12}$ cm$^2$/s, $1 \times 10^{-11}$ cm$^2$/s, $1 \times 10^{-10}$ cm$^2$/s, $1 \times 10^{-9}$ cm$^2$/s, $1 \times 10^{-8}$ cm$^2$/s, or $1 \times 10^{-7}$ cm$^2$/s. In embodiments, the lithium ion diffusivity of the anode electrode 1120 can be within a range formed by selecting any two numbers listed in the immediately previous sentence, e.g., between $1 \times 10^{-14}$ cm$^2$/s and $1 \times 10^{-7}$ cm$^2$/s, but aspects of the present disclosure are not limited thereto.

Current Collector at the Anode Electrode

The current collector 1110 collects electrical energy generated at the anode electrode 1120 and supports the anode electrode 1120. The material of the current collector 1110 is not particularly limited as long as it allows adhesion of the anode electrode 1120, has a suitable electrical conductivity, and does not cause significant chemical changes in the corresponding solid-state battery 1101 in the voltage range of the solid-state battery 1101. For example, the current collector 1110 is made of or includes a metal or a conductive carbon, although not limited thereto. The metal of the current collector 1110 can include one or more selected from the group consisting of aluminum, an aluminum alloy, copper, a copper alloy, nickel, a nickel alloy, titanium, a titanium alloy, iron, an iron alloy (e.g., steel, stainless steel), silver, a silver alloy, or a combination thereof, although not limited thereto.

Shape and Size of the Current Collector at the Anode Electrode

It is possible to increase the adhesion of the anode electrode 1120 to the current collector 1110 by forming fine surface irregularities on the surface of the current collector 1110. The current collector 1110 can have various shapes, such as, for example, a film, a sheet, a foil, a net, a porous body, a foam, a non-woven web body, the like, or combinations thereof, but aspects of the present disclosure are not limited thereto. In addition to the shapes mentioned, the current collector 1110 can also be configured as a honeycomb structure, a perforated sheet, a woven or non-woven mesh, a sintered porous body, or a three-dimensional interconnected network. These various shapes can be tailored to optimize the surface area, mechanical strength, and current collection efficiency of the current collector 1110. Furthermore, the current collector 1110 can be designed to accommodate different form factors of solid-state batteries, such as pouch cells, cylindrical cells, or prismatic cells, each offering unique advantages in terms of packaging efficiency, thermal management, and overall battery performance.

Thickness of Current Collector at the Anode Electrode

A thickness, $t_5$, of the current collector 1110 can be 3, 5, 10, 15, 20, 25, 50, 100, 150, 200, 300, 400, or 500 $\mu$m. In embodiments, the thickness, $t_5$, of the current collector 1110 can be within a range formed by selecting any two numbers listed in the immediately previous sentence, e.g., between 5 $\mu$m and 500 $\mu$m, but aspects of the present disclosure are not limited thereto.

Manufacturing Method for the Anode Electrode

The anode electrode 1120 can be obtained by various methods, such as, for example, atomic deposition, extrusion, rolling, a slurry method, or a combination thereof. For example, the anode active material can be mixed and agitated with a solvent, and optionally a binder, and a dispersing agent to form slurry. Then, the slurry can be applied (e.g., coated) onto the current collector 1110, followed by pressing and drying, to obtain the anode electrode 1120. In addition to the methods mentioned, the anode electrode 1120 can be manufactured using various other techniques, including dry electrode processes. These alternative methods can offer advantages in terms of environmental impact, cost-effectiveness, and scalability, but aspects of the present disclosure are not limited thereto.

Dry powder coating can be employed as an alternative to the slurry method. In this process, the anode active material, conductive additives, and binder are mixed in a dry state and then directly applied to the current collector 1110 using electrostatic deposition or mechanical compression. This method eliminates the need for solvents, potentially reducing environmental impact and processing time.

Additive manufacturing techniques, such as 3D printing, can be used to fabricate the anode electrode 1120. Various 3D printing methods, including fused deposition modeling (FDM), selective laser sintering (SLS), or direct ink writing (DIW), can be utilized depending on the specific materials and desired electrode properties. This approach allows for precise control over the electrode structure and porosity.

Electrospinning is another potential method for manufacturing the anode electrode 1120. In this process, a solution containing the anode active material, conductive additives, and a polymer binder is extruded through a nozzle under an electric field, resulting in the formation of nanofibers. These fibers can be collected directly on the current collector 1110 to form a highly porous electrode structure with increased surface area.

Tape casting can be employed to prepare the anode electrode 1120. This technique involves spreading a slurry of electrode materials onto a moving carrier film using a doctor blade, followed by drying and calendering. The resulting electrode tape can then be laminated onto the current collector 1110.

Spray coating techniques can be used to fabricate the anode electrode 1120. A fine mist of the electrode slurry is sprayed onto the current collector 1110 using compressed air or ultrasonic atomization. This approach can allow for the creation of thin, uniform electrode layers and can be particularly useful for large-scale production.

Freeze-casting is another potential method for manufacturing the anode electrode 1120. This process involves freezing a slurry of electrode materials, followed by sublimation of the ice to create a porous structure. The resulting porous electrode can then be sintered and attached to the current collector 1110.

In some cases, a sol-gel process can be used to prepare the anode electrode 1120. This method involves the formation of a colloidal suspension (sol) that is then converted into a gel-like network containing the anode active material and other components. The gel can be applied to the current collector 1110 and subsequently heat-treated to form the final electrode structure.

For certain applications, physical vapor deposition (PVD) or chemical vapor deposition (CVD) techniques can be employed to create thin film anodes directly on the current collector 1110. These methods can produce highly uniform and dense electrode layers, which can be particularly beneficial for certain types of solid-state batteries.

Lastly, mechanical alloying and high-energy ball milling can be used to prepare composite anode materials, which can then be pressed into electrodes or applied to the current collector 1110 using one of the aforementioned methods. This technique can be particularly useful for creating nanostructured or amorphous anode materials with enhanced electrochemical properties.

Ball Milling Generally

Ball milling is a valuable technique for mixing and preparing materials for solid-state batteries. Ball milling is a mechanical technique widely used to grind powders into fine particles and mix materials in various applications, including the preparation of solid-state battery components. In the context of solid-state batteries, ball milling is often employed to mix and blend the electrode materials, solid electrolytes, and other components. example ball milling devices can include planetary ball mills, attritor mills, and vibratory ball mills. These devices typically consist of a rotating or vibrating chamber containing grinding balls made of materials such as steel, ceramic, or zirconia.

Homogeneous Mixing

Ball milling is effective in achieving a homogeneous mixture of different powders. This is crucial for ensuring uniform distribution of components in the electrode materials and solid electrolytes, which, in turn, impacts the overall performance of the battery.

Reducing Particle Size

Ball milling can reduce the particle size of the materials involved, leading to increased surface area and improved reactivity. Smaller particle sizes can enhance the kinetics of electrochemical reactions, contributing to better battery performance.

Enhanced Electrode-Electrolyte Interface

Ball milling can facilitate the formation of a well-defined interface between the electrode and solid electrolyte. This is important for promoting efficient ion transport and minimizing interfacial resistance within the solid-state battery.

Promoting Solid-State Reactions

Ball milling can induce solid-state reactions between different components, promoting the formation of desired phases and structures in the materials. This is particularly relevant for the synthesis of composite electrode materials or preparation of the composite electrolyte materials provided herein.

Optimizing Conductivity

Ball milling can be used to optimize the conductivity of electrode materials by ensuring a good distribution of conductive additives, such as carbon or metal nanoparticles, within the composite; or the additive materials, within the solid electrolyte, as provided herein.

Controlling Morphology

The milling process can also influence the morphology of the materials, including particle shape and size distribution. Controlling these aspects is important for achieving the desired electrochemical properties and overall performance of the solid-state battery.

Energy Considerations

Ball milling is an energy-intensive process, and the duration and speed of milling need to be carefully controlled to avoid excessive heating, which could lead to undesired reactions or damage to the materials.

Application Methods for Slurry for Anode Electrode

The application of the slurry for the anode electrode 1120 can include using a technique selected from the group consisting of slot die coating, gravure coating, spin coating, spray coating, roll coating, curtain coating, extrusion, casting, screen printing, inkjet printing, spray printing, gravure printing, heat transfer printing, a Toppan printing method, intaglio printing, offset printing, the like, and combinations thereof. In addition to the aforementioned techniques, other methods for applying the anode slurry to the current collector can include doctor blade coating, dip coating, and meniscus coating. Double slot die layer coating can also be employed, which allows for the simultaneous application of two distinct layers of electrode materials onto the current collector in a single pass. This method can potentially enable the creation of gradient structures within the electrode, optimizing both electrochemical performance and mechanical properties.

Solvent for the Slurry for the Anode Electrode

The solvent for forming the anode electrode 1120 can include water and/or an organic solvent, such as, for example, N-methyl pyrrolidone (NMP), dimethyl formamide (DMF), acetone, dimethyl acetamide, dimethyl sulfoxide (DMSO), isopropyl alcohol, the like, or combinations thereof. The solvent can be used in an amount sufficient to dissolve and disperse the electrode ingredients, such as the anode active material and binder, considering the slurry coating thickness, production yield, the like, or combinations thereof. Additional organic solvents that can be used include ethanol, methanol, propanol, butanol, ethyl acetate, methyl ethyl ketone, tetrahydrofuran, diethyl ether, and toluene. In some embodiments, the anode electrode 1120 can be prepared using a solvent-free method, such as dry powder processing or melt extrusion, which eliminates the need for liquid solvents and can offer environmental and cost benefits, but aspects of the present disclosure are not limited thereto.

Dispersing Agent for Slurry for the Anode Electrode

The dispersing agent forming the anode electrode 1120 can include an aqueous dispersing agent and/or an organic dispersing agent, such as, for example, N-methyl-2-pyrrolidone. The dispersing agent forming the anode electrode 1120 can include an aqueous dispersing agent and/or an organic dispersing agent, such as, for example, N-methyl-2-pyrrolidone. Other examples of aqueous dispersing agents can include sodium dodecyl sulfate (SDS), polyvinylpyrrolidone (PVP), and carboxymethyl cellulose (CMC), while additional organic dispersing agents can include Triton X-100, polyethylene glycol (PEG), and various surfactants such as polysorbates or poloxamers. In some embodiments, the anode electrode 1120 can be prepared using methods that do not require a dispersing agent, such as dry powder processing or certain additive manufacturing techniques, but aspects of the present disclosure are not limited thereto.

Drying Technique for the Anode Electrode

The slurry for the anode electrode 1120 can be dried by irradiating heat, electron beams (E-beams), gamma rays, or UV (G, H, I-line), the like, or combinations thereof, to vaporize the solvent. For example, the slurry can be vacuum dried at room temperature, but aspects of the present disclosure are not limited thereto. Although the solvent is removed through evaporation by the drying step, the other ingredients do not evaporate and remain as they are to form the anode electrode 1120. In addition to the drying techniques mentioned, several other methods can be employed to dry the anode electrode slurry. These additional techniques can offer various advantages depending on the specific materials, production requirements, and desired electrode properties.

Infrared (IR) drying can be used to rapidly heat the electrode surface, promoting efficient solvent evaporation. This method can be particularly effective for thin electrode coatings and can allow for precise control of the drying process. Microwave drying is another option that can provide volumetric heating of the electrode material, potentially leading to more uniform drying throughout the electrode thickness. In some cases, a combination of convection and microwave drying can be employed to optimize both drying speed and uniformity.

Freeze-drying, also known as lyophilization, can be utilized for certain electrode formulations. This process involves freezing the slurry and then sublimating the solvent under vacuum conditions. Freeze-drying can help maintain the porous structure of the electrode, which can be beneficial for electrolyte penetration and ion transport.

Supercritical $CO_2$ drying is an advanced technique that can be employed for specialized electrode materials. This method involves replacing the solvent with liquid $CO_2$, which is then brought to its supercritical state and vented. This approach can help preserve delicate nanostructures within the electrode and can be particularly useful for aerogel-based electrodes.

In some cases, a two-step drying process can be employed. For example, initial drying can be performed at a lower temperature to remove bulk solvent, followed by a higher temperature step to remove residual solvent and potentially initiate any desired chemical reactions within the electrode material, but aspects of the present disclosure are not limited thereto.

Ultrasonic drying can also be considered for certain electrode formulations. This technique uses high-frequency sound waves to agitate the solvent molecules, potentially accelerating the drying process and improving solvent removal from porous structures within the electrode.

Solid Electrolyte Layer Generally

The solid electrolyte layer 106 is suitable for lithium ion diffusion between the cathode electrode 1130 and the anode electrode 1120. The solid electrolyte layer 106 provides an electrically conductive pathway for the movement of charge carriers between the cathode electrode 1130 and the anode electrode 1120. The solid electrolyte layer 106 is in electrical communication with the cathode electrode 1130 and the anode electrode 1120. In embodiments, the solid electrolyte layer 106 is formed over and in direct contact with the cathode electrode 1130 or the anode electrode 1120. In embodiments, the solid electrolyte layer 106 is in direct contact with the cathode electrode 1130 and the anode electrode 1120. In other embodiments, another functional layer can be interposed between the solid electrolyte layer 106 and the cathode electrode 1130 and/or the anode electrode 1120.

The solid electrolyte layer can have a gradient structure, with composition or properties that vary across its thickness to optimize ion transport and interfacial compatibility. For example, the layer could have higher ionic conductivity near the electrodes and higher mechanical strength in the middle, but aspects of the present disclosure are not limited thereto.

In some embodiments, the solid electrolyte layer can be formed as a composite, incorporating both ceramic and polymer components to balance mechanical properties and ion conductivity. The ceramic component could provide structural stability while the polymer enhances flexibility and electrode contact.

The solid electrolyte layer can include engineered porosity or channels to facilitate ion transport while maintaining mechanical integrity. These could be created through techniques like freeze-casting or templating.

In certain configurations, the solid electrolyte layer can be applied as multiple thin sublayers with slightly different compositions or properties, allowing for fine-tuning of the overall layer characteristics.

The interface between the solid electrolyte and electrodes can be modified through surface treatments or the addition of buffer layers to improve adhesion and reduce interfacial resistance. This could involve plasma treatment, chemical modification, or deposition of nanoscale interface layers.

In some embodiments, the solid electrolyte layer can incorporate self-healing properties, such as the inclusion of microcapsules containing electrolyte material that can repair small cracks or defects that form during cycling.

The solid electrolyte layer can be designed with anisotropic properties, having different ionic conductivities in different directions to optimize ion transport between electrodes while minimizing unwanted side reactions.

In certain configurations, the solid electrolyte layer can include embedded current collectors or conductive networks to enhance charge transport and distribution across the battery structure.

The solid electrolyte layer can be formulated to have temperature-dependent properties, optimizing performance across a wide range of operating conditions. This could involve phase-change materials or components with different thermal expansion coefficients.

In some embodiments, the solid electrolyte layer can be designed to be pressure-sensitive, with ionic conductivity that improves under moderate compression to enhance performance during battery operation.

Material for Solid Electrolyte Layer

The solid electrolyte layer 106 can be capable of transport of lithium ions. The material of the solid electrolyte layer 106 is not particularly limited as long as it allows adhesion with adjacent layers, has a suitable electrical conductivity, and does not cause significant chemical changes in the corresponding solid-state battery 1101 in the voltage range of the solid-state battery 1101. For example, besides the composite solid electrolyte materials including the additive material and the sulfide containing solid electrolyte material provided herein, the solid electrolyte layer 106 can include various inorganic solid electrolytes, polymer solid electrolytes, polymer gel electrolytes, although not limited thereto. Additionally or alternatively, the solid electrolyte layer 106 can include ceramic electrolytes, glass electrolytes, hybrid organic-inorganic electrolytes, and nanostructured electrolytes, although not limited to these categories.

Inorganic Solid Electrolyte

The inorganic solid electrolyte can include a crystalline solid electrolyte, a non-crystalline solid electrolyte, a glass ceramic solid electrolyte, the like, or a combination thereof, although not limited thereto. The inorganic solid electrolyte can be sulfide-based, oxide-based, the like, or a combination thereof. In addition to sulfide-based and oxide-based inorganic solid electrolytes, other types of inorganic solid electrolytes can include halide-based electrolytes, nitride-based electrolytes, and borate-based electrolytes. For example, lithium-rich anti-perovskites (LiRAP) such as $Li_3OCl$ and $Li_3OBr$, lithium nitride (Li3N), and lithium borohydride ($LiBH_4$) have been investigated as potential solid electrolyte materials for lithium-ion batteries, but aspects of the present disclosure are not limited thereto.

Sulfide Based Solid Electrolyte

As provided herein, the sulfide-based solid electrolyte includes sulfur (S) and has ionic conductivity of metal belonging to Group I or Group II of the periodic table, and can include Li-P-S-based glass or Li-P-S-based glass ceramics. For example, the sulfide-based solid electrolyte can include lithium sulfide, silicon sulfide, germanium sulfide and boron sulfide. Particular examples of the inorganic solid electrolyte can include $Li_{3.833}Sn_{0.833}As_{0.166}S_4$, $Li_4SnS_4$, $Li_{3.25}Ge_{0.25}P_{0.75}S_4$, $Li_2S-P_2S_0$, $B_2S_3-Li_2S$, $XLi_2S-(100-x)P_2S_5$ (x=70-80), $Li_2S-SiS_2-Li_3N$, $Li_2S-P_2S_5-LiI$, $Li_2S-SiS_2-LiI$, $Li_2S-B_2S_3-LiI$, $Li_3N$, LISICON, LIPON ($Li_{3+y}PO_{4-x}N_x$), thio-LISICON ($Li_{3.25}Ge_{0.25}P_{0.75}S_4$), $Li_2O-Al_2P_3-TiO_2-P_2O_5$ (LATP), $Li_2S-P_2S_5$, $Li_2S-LiI-P_2S_5$, $Li_2S-LiI-Li_2O-P_2S_5$, $Li_2S-LiBr-P_2S_5$, $Li_2S-Li_2O-P_2S_5$, $Li_2S-Li_3PO_4-P_2S_5$, $Li_2S-P_2S_5-P_2O_5$, $Li_2S-P_2S_5-SiS_2$, $Li_2S-P_2S_5-SnS$, $Li_2S-P_2S_5-Al_2S_3$, $Li_2S-GeS_2$, $Li_2S-GeS_2-ZnS$, $Li10GeP_2S_{12}$ (LGPS), $Li7P_3S_{11}$, $Li_6PS_5Cl$, $Li_6PS_5Br$, $Li_6PS_5I$, $Li_{9.54}Si_{1.74}P_{1.44}S_{11.7}Cl_{0.3}$, $Li_{11}Si_2PS_{12}$, the like, or combinations thereof. In some cases, doped variants of these materials, such as Al-doped $Li_{10}GeP_2S_{12}$ or Sb-doped $Li_6PS_5Cl$, can also be employed to further enhance ionic conductivity or stability, but aspects of the present disclosure are not limited thereto.

Oxide Based Solid Electrolyte

The oxide-based solid electrolyte material contains oxygen (O) and has ionic conductivity of metal belonging to Group I or II of the periodic table. The oxide-based solid electrolyte material can include at least one selected from the group consisting of LLTO-based compounds, $Li_6La_2CaTa_2O_{12}$, $Li_6La_2ANb_2O_{12}$ (A is Ca or Sr), $Li_2Nd_3TeSbO_{12}$, $Li_3BO_{2.5}N_{0.5}$, $Li_9SiA_1O_8$, LAGP-based compounds, LATP-based compounds, $Li_{1+x}Ti_{2-x}Al_xSi_y(PO_4)_{3-y}$ ($0 \leq x \leq 1$, $0 \leq y \leq 1$), $LiAl_xZr_{2-x}(PO_4)_3$ ($0 \leq x \leq 1$, $0 \leq y \leq 1$), $LiTi_xZr_{2-x}(PO_4)_3$ ($0 \leq x \leq 1$, $0 \leq y \leq 1$), LISICON-based compounds, LIPON-based compounds, perovskite-based compounds, NASICON-based compounds and LLZO-based or derived compounds (such as Al-doped $Li_7La_3Zr_2O_{12}$ and Ta-doped $Li_7La_3Zr_2O_{12}$). Lithium-rich anti-perovskites like $Li_3OCl$ and $Li_3OBr$ have also been investigated as potential oxide-based solid electrolytes. In some cases, composite oxide electrolytes combining multiple oxide materials, such as LLZO-LATP composites, can be employed to leverage the advantages of different oxide systems.

Polymer Solid Electrolyte

The polymer solid electrolyte is a composite of electrolyte salt with polymer resin and has lithium ion conductivity. The polymer solid electrolyte can include a polyether polymer, a polycarbonate polymer, an acrylate polymer, a polysiloxane polymer, a phosphazene polymer, a polyethylene derivative, an alkylene oxide derivative, a phosphate polymer, a polyagitation lysine, a polyester sulfide, a polyvinyl alcohol, a polyvinylidene fluoride, a polymer containing an ionically dissociable group, poly(ethylene imine) (PEI), poly(methyl methacrylate) (PMMA), poly(acrylonitrile) (PAN), poly(ethylene succinate) (PES), biopolymers such as chitosan and cellulose derivatives, the like, or combinations thereof. The solid polymer electrolyte can include a polymer resin, such as a branched copolymer including polyethylene oxide (PEO) backbone copolymerized with a comonomer including an amorphous polymer, such as, for example, PMMA, polycarbonate, polymethylsidiloxane (pdms) and/or phosphazene, comb-like polymer, crosslinked polymer resin, polyethylene glycol (PEG), polypropylene oxide (PPO), polyacrylonitrile (PAN), poly(methyl methacrylate) (PMMA), poly(vinylidene fluoride-co-hexafluoropropylene) (PVDF-HFP), poly(ethylene oxide-co-propylene oxide) (PEO-PPO), poly(ethylene imine) (PEI), poly(vinyl pyrrolidone) (PVP), poly(vinyl alcohol) (PVA), various block copolymers or graft copolymers incorporating these materials, the like, or combinations thereof, but aspects of the present disclosure are not limited thereto.

Polymer Gel Electrolyte

The polymer gel electrolyte can be formed by incorporating an organic electrolyte containing an organic solvent and an electrolyte salt, an ionic liquid, monomer, or oligomer to a polymer resin, the like, or combinations thereof. The polymer resin for the polymer gel can include polyether polymers, PVC polymers, PMMA polymers, polyacrylonitrile (PAN), polyvinylidene fluoride (PVDF), poly(vinylidene fluoride-co-hexafluoropropylene: PVDF-co-HFP), the like, or combinations thereof. Examples of polymer gel electrolytes that can be suitable for solid state batteries include poly(ethylene oxide) (PEO), poly(methyl methacrylate-co-ethyl acrylate) (PMMA-EA), poly(acrylonitrile-co-methyl methacrylate) (PAN-MMA), poly(vinyl acetate) (PVAc), poly(ethylene glycol diacrylate) (PEGDA), poly(vinyl pyrrolidone) (PVP), poly(ethylene glycol methyl ether acrylate) (PEGMEA), poly(ethylene glycol methyl ether methacrylate) (PEGMEMA), poly(ionic liquid) (PIL), poly(ethylene glycol-co-propylene glycol) (PEG-PPG), poly(vinyl alcohol-co-ethylene) (PVA-PE), poly(acrylamide) (PAM), poly(2-hydroxyethyl methacrylate) (PHEMA), poly(ethylene glycol-co-polyethylene oxide) (PEG-PEO), and poly(methacrylic acid) (PMAA) based gel electrolytes to optimize the electrochemical and physical properties of the solid electrolyte.

## Electrolyte Salt

The electrolyte salt is an ionizable lithium salt and can be represented by $Li^+X^-$. $X^-$ can include an anion selected from the group consisting of $F^-$, $Cl^-$, $Br^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(F_2SO_2)_2N^-$, $CF_3CF_2(CF_3)_2CO^-$, $(CF_3SO_2)_2CH^-$, $CF_3(CF_2)_7SO_3^-$, $CF_3CO_2^-$, $CH_3CO_2^-$, $SCN^-$, $(CF_3CF_2SO_2)_2N^-$, and the like. For example, the lithium salt can be any one selected from the group consisting of LiTFSI, LiCl, LiBr, LiI, $LiClO_4$, lithium tetrafluoroborate ($LiBF_4$), $LiB_{10}Cl_{10}$, lithium hexafluorophosphate ($LiPF_6$), $LiAsF_6$, $LiSbF_6$, $LiAlCl_4$, LiSCN, $LiCF_3CO_2$, $LiCH_3SO_3$, $LiCF_3SO_3$, $LiN(SO_2CF_3)_2$, $LiN(SO_2C_2F_5)_2$, $LiC_4F_9SO_3$, $LiC(CF_3SO_2)_3$, $(CF_3SO_2).2NLi$, lithium chloroborate, lithium lower aliphatic carboxylate, lithium imide 4-phenylborate, lithium bis(oxalato)borate (LiBOB), lithium difluoro(oxalato)borate (LiDFOB), lithium bis(fluorosulfonyl)imide (LiFSI), lithium 4,5-dicyano-2-(trifluoromethyl)imidazolide (LiTDI), lithium bis(trifluoromethanesulfonyl)imide (LiTFSI), and lithium bis(fluorosulfonyl)imide (LiFSI), the like, and combinations thereof. The electrolyte salt can include any combination of the salts described herein, but aspects of the present disclosure are not limited thereto.

## Amount of Electrolyte Salt

The solid electrolyte layer 106 can include at or 0, 50, 60, 70, 80, 100, 200, 300, or 400 parts of electrolyte salt, if present, based on the total weight of the solid electrolyte layer 106. In embodiments, electrolyte salt in the solid electrolyte layer 106 can be within a range formed by selecting any two numbers listed in the immediately previous sentence, e.g., between 0 parts and 400 parts, or 60 parts and 400 parts based on the total weight of the solid electrolyte layer.

## Ion Conductivity of the Solid Electrolyte Layer

The solid electrolyte layer 106 can include a suitable reduction stability and/or ion conductivity. Since the solid electrolyte layer 106 mainly functions to transport lithium ions between electrodes, the solid electrolyte layer 106 can include a desirable ion conductivity of at, about, or greater than, $10^{-7}$ S/cm, $10^{-6}$ S/cm, $10^{-5}$ S/cm, or $10^{-4}$ S/cm.

## Thickness of the Solid Electrolyte Layer

A thickness, $t_6$, of the solid electrolyte layer 106 can be 3, 5, 10, 15, 20, 25, 30, 50, 70, 100, 150, 200, 300, 400, 500, or 1,000 $\mu$m. In embodiments, the thickness, $t_6$, of the solid electrolyte layer 106 can be within a range formed by selecting any two numbers listed in the immediately previous sentence, e.g., between about 5 $\mu$m and 1,000 $\mu$m, 30 $\mu$m and 100 $\mu$m, or 30 $\mu$m and 50 $\mu$m.

## Unfinished Product

The cell 1001 as shown in of FIG. 24 can be provided as an unfinished product. In embodiments, the cell 1001 is stored, transported, and/or delivered to a reseller, customer, or the like that finishes manufacture of a battery assembly or product comprising the cell 1001. In other embodiments, the cell 1001 is a finished battery assembly or product.

## Seal the Battery

An enclosure 1112 of the solid-state battery can be sealed to finish making the solid-state battery 1101 such that it will work as a battery. The sealing process can involve various techniques to ensure the internal components are protected from external environmental factors and to maintain the integrity of the battery structure. For example, the enclosure 1112 can be hermetically sealed using methods such as laser welding, ultrasonic welding, or adhesive bonding, but aspects of the present disclosure are not limited thereto. In some cases, the sealing process can also include the introduction of a protective atmosphere or the removal of air to create a vacuum within the enclosure. This sealing step can be helpful for preventing moisture ingress, which could potentially degrade the performance of the sulfide-based solid electrolyte. Additionally, the sealing process can incorporate safety features such as pressure relief mechanisms to manage any potential gas build-up during battery operation. Once properly sealed, the solid-state battery 1101 is ready for final quality control checks, which can include electrical testing, leak detection, and visual inspections. After passing these checks, the solid-state battery 1101 could be packaged and sold as a finished product, ready for integration into various electronic devices, electric vehicles, energy storage systems, and so forth.

Battery Configured

The solid-state battery 1101 is provided in various configurations to suit different applications and device requirements. In some aspects, the battery can be manufactured in a cylindrical form, which can be advantageous for certain types of portable electronics or automotive applications. Alternatively, the solid-state battery 1101 can be produced in a prismatic form, which can allow for more efficient space utilization in devices with rectangular form factors. In other cases, a pouch form can be employed, offering flexibility in shape and potentially reducing overall battery weight. The pouch form can further be especially suitable for solid state batteries due to easier application and control of uniform pressures within the battery. The choice of configuration can depend on factors such as the intended use, space constraints, thermal management requirements, and manufacturing considerations. In some embodiments, hybrid or custom configurations combining elements of different forms can be utilized to meet specific design needs. The versatility in battery form factors can enable the integration of solid-state batteries into a wide range of products, from small wearable devices to large-scale energy storage systems.

Voltage

The solid-state battery 1101 is configured to output a voltage of at or 1, 2, 3, 4, 5, 6, 10, 12, 20, 24, 30, 40, 48, 50, 60, 70, 80, 90, 96, 100, 200, 300, 400, or 500 V DC. In embodiments, the output voltage of the solid-state battery 1101 can be within a range formed by selecting any two numbers listed in the immediately previous sentence, e.g., between 1 V DC and 500 V DC.

Capacity

The solid-state battery 1101 is configured to have a specific capacity of at, about, or greater than 100, 110, 120, 130, 140, 150, 160, 170, 180, 190, 200, or 300 mAh/g. In embodiments, the solid-state battery 1101 can have a capacity formed by selecting any two numbers listed in the immediately previous sentence, e.g., between 100 mAh/g and 300 mAh/g.

Volume Expansion Calculation

The solid-state battery 1101 can include a desirable volume expansion rate. The volume expansion rate can be calculated from an increase amount of thickness after a first cycle of charging and discharging compared to an initial thickness. The volume expansion rate means a ratio of an amount of change in a thickness increased after a first cycle of charging and discharging to an initial thickness of a particular element. A first cycle of charging and discharging is performed by CC-CV charging a battery at 0.1 C and cutting off at 4.25 to 4.4 V and 0.02 C, and CC discharging the battery at 0.1 C and cutting off at 3 V. The volume expansion rate is calculated by Equation 1 below in which A can represent a thickness before charging and discharging and B can represent a thickness after charging and discharging. The thickness can be measured using a Mauser micrometer or a scanning electron microscope (SEM). Equation 1:

$$\text{Volume expansion rate} = [(B-A)/A] \times 100 \; \text{C-Rate}$$

C-rate as used herein refers to the rate at which the battery is discharged relative to its maximum capacity. For example, a 1C rate means the discharge current will discharge the entire battery within one hour. That is, for a battery with a capacity of 20 Amp-hrs, a discharge current at a 1C would be 20 Amps, but aspects of the present disclosure are not limited thereto.

Other example ways to measure and calculate the volume expansion rate for a solid-state battery can include using volumetric expansion measurement (e.g., gas pycnometry), in-situ dilatometry, X-ray tomography, strain gauge measurements, optical methods (e.g., digital image correlation or laser interferometry), pressure-based methods, and electrochemical strain microscopy

While multiple examples were provided above, those skilled in the art will be able to appropriately modify and practice any aspects of the present disclosure by omitting, changing, or substituting all or part of the constitution of the present disclosure, or by adding other components within the scope not departing from the technical spirit of the present disclosure with reference to the present specification and the accompanying drawings.

The terms and expressions used herein are to be interpreted broadly and should not be construed in a limiting sense. As used herein, the word 'comprise' does not exclude the presence or addition of one or more other components other than the recited components.

As used herein, expressions in the singular form comprise the plural form, unless the context clearly dictates otherwise.

Each of the example aspects described in this specification can be combined with each other, and unless contradictory, what is described in a specific aspect can equally apply to other aspects even if not described in other aspects.

Regarding the features of the present disclosure being thus described, it will be obvious that the same can be varied in many ways. Such variations are not to be regarded as a departure from the spirit and scope of the invention, and all such modifications as would be obvious to one skilled in the art are intended to be included within the scope of the following claims.

**Claims**

1. A battery cell pressing system, comprising:

   a sealed case having an internal chamber, the sealed case including at least one window to allow visual inspection of the internal chamber;
   a pouch-type battery cell disposed within the internal chamber of the sealed case;
   a fluid filling the internal chamber and surrounding the pouch-type battery cell;
   a fluid entrance in fluid communication with the internal chamber;
   a pressing member configured to adjust a pressure of the fluid within the internal chamber such that the pressure at which the fluid presses the pouch-type battery cell is 1 MPa to 10 MPa;
   a heater configured to heat the fluid within the internal chamber; and
   a pressure measuring member configured to measure the pressure within the internal chamber,
   wherein the fluid isotropically presses the pouch-type battery cell during at least one of charging and discharging of the pouch-type battery cell.

2. The battery cell pressing system according to claim 1, wherein the fluid is a gas or a liquid.

3. The battery cell pressing system according to claim 2, wherein the fluid is air.

4. The battery cell pressing system according to claim 1, further comprising an electric wire member configured to input and output an electrical signal of the pouch-type battery cell.

5. The battery cell pressing system according to claim 1, wherein the sealed case has a cylindrical shape or a prismatic shape.

6. The battery cell pressing system according to claim 1, wherein the sealed case includes a metal.

7. The battery cell pressing system according to claim 6, wherein the metal includes at least one of aluminum (Al), stainless steel (SUS), titanium (Ti), nickel (Ni), iron (Fe) and copper (Cu).

8. The battery cell pressing system according to claim 1, wherein the pouch-type battery cell is a lithium secondary battery,

9. The battery cell pressing system according to claim 1, wherein the pouch-type battery cell has a separator that includes a solid state electrolyte (SSE).

10. The battery cell pressing system according to claim 1, wherein the pouch-type battery cell is an all-solid-state battery (ASSB).

**11.** A battery pack comprising the battery cell pressing system according to claim 1.

**12.** The battery pack according to claim 11, further comprising two or more pouch-type battery cells including the pouch-type battery cell.

**13.** The battery pack according to claim 11, wherein the sealed case includes aluminum with a thickness of approximately 0.5 mm.

**14.** A battery cell pressing device, comprising:

a case having an internal space to accommodate a battery cell and a fluid;
at least one fluid entrance, wherein fluid is introduced or discharged from the case through the at least one fluid entrance; and
a pressing member,
wherein the pressing member regulates a pressure inside the case,
wherein, when the fluid and the battery cell are inside the case, the pressing member regulates the pressure of the fluid so that an isostatic pressure is applied to the battery cell, and
wherein the isostatic pressure is less than 10 MPa.

**15.** The battery cell pressing device according to claim 14, wherein the fluid isotropically presses the battery cell during at least one of charging and discharging of the battery cell.

**16.** The battery cell pressing device according to claim 14, further comprising at least one window to allow visual inspection of the internal space of the case.

**17.** The battery cell pressing device according to claim 14, wherein the battery cell is a lithium secondary battery that includes a separator of a solid state electrolyte (SSE).

**18.** The battery cell pressing system according to claim 14, wherein the battery cell is an all-solid-state battery (ASSB).

**19.** A battery cell pressing device, comprising:

a case having at least one window;
a fluid filling an inside of the case;
a battery cell located inside the case, and
a pressing member configured to regulate a pressure inside the case using the fluid so that the fluid generates an isostatic force on the battery cell that is equal to or less than approximately 10 MPa,
wherein the pressing member cycles the pressure applied to the battery cell inside the case between approximately 1 MPa to 5 Mpa.

**20.** The battery cell pressing device of claim 19, wherein the pressing member regulates the pressure so that the fluid isotropically presses the battery cell during at least one of charging and discharging of the battery cell.

**FIG. 1**

**FIG. 2**

**FIG. 3**

**FIG. 4**

**FIG. 5**

FIG. 6

(a) 304 Steel
- Yield strength: 300 MPa
- Young's modulus: 200 Gpa
- Density: 8.1 g cm$^{-3}$

(b) 7075 Al Alloy
- Yield strength: 450 MPa
- Young's modulus: 40 Gpa
- Density: 2.81 g cm$^{-3}$

(c) Ti-6Al-4V (Grade 5 Ti)
- Yield strength: 850 MPa
- Young's modulus: 110 Gpa
- Density: 4.43 g cm$^{-3}$

**FIG. 7**

(a)

(b)

Fluid

100 (1100)

**FIG. 8**

(a)

(b)
- Al foil
- Cathode
- Separator
- Anode
- Cu foil

(c)

(d)
Spring
Rubber

(e)

**FIG. 9**

**FIG. 10**

FIG. 11

(a) (b) (c) (d) (e) (f)

Rigid surface

Soft surface

Fluid

1 cm

(g)

Cell Voltage (V)

Specific Capacity (mAh g$^{-1}$)

Uniaxial (metal)
Uniaxial (rubber)
Isostatic

(h)

Coulombic Efficiency (%)

Discharge Capacity (mAh g$^{-1}$)

Cycle Number

Isostatic

Uniaxial (rubber)

**FIG. 12**

FIG. 13

EP 4 756 948 A1

FIG. 14

**FIG. 15**

**FIG. 16**

**FIG. 17**

**FIG. 18**

FIG. 19

FIG. 20

**FIG. 21**

(a) 150 MPa (b) 350 MPa (c) 500 MPa

**FIG. 22**

```
┌─────────────────────┐
│        START        │ ───────────  S2210
└─────────────────────┘
          │
          ▼
┌─────────────────────┐
│    ACTIVATE CELL     │ ──────────  S2220
└─────────────────────┘
          │
          ▼
┌─────────────────────┐
│     PRESS CELL↵      │
│       DURING        │ ──────────  S2230
│  CHARGE/DISCHARGE    │
└─────────────────────┘
          │
          ▼
┌─────────────────────┐
│        END↵         │ ──────────  S2240
└─────────────────────┘
```

**FIG. 23**

1000

**FIG. 24**

## INTERNATIONAL SEARCH REPORT

| International application No. |
|---|
| **PCT/KR2024/016884** |

**A.    CLASSIFICATION OF SUBJECT MATTER**

**H01M 10/04**(2006.01)i; **H01M 10/44**(2006.01)i; **H01M 10/42**(2006.01)i; **H01M 10/0585**(2010.01)i; **H01M 4/04**(2006.01)i

According to International Patent Classification (IPC) or to both national classification and IPC

**B.    FIELDS SEARCHED**

Minimum documentation searched (classification system followed by classification symbols)

H01M 10/04(2006.01); H01M 10/40(2006.01); H01M 10/54(2006.01); H01M 2/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 셀 (battery cell), 가압 (compress), 등방 (isostatic), 히터 (heater), 창 (window)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2023-0125553 A (LG ENERGY SOLUTION, LTD.) 29 August 2023 (2023-08-29) See abstract; claims 1, 3, 4, 8 and 9; paragraphs [0046], [0048], [0054], [0058], [0070] and [0078]; and figures 3 and 4. | 1-13,15,20 |
| A | | 14,16-19 |
| X | JP 2022-513762 A (TERAWATT TECHNOLOGY INC.) 09 February 2022 (2022-02-09) See claims 19 and 20; paragraphs [0021], [0030], [0046], [0051] and [0053]; and figure 9. | 14,16-19 |
| Y | | 1-13,15,20 |
| A | JP 2003-086251 A (SONY CORP.) 20 March 2003 (2003-03-20) See abstract; and claim 1. | 1-20 |
| A | JP 2017-027911 A (SONY CORP.) 02 February 2017 (2017-02-02) See abstract; and claim 1. | 1-20 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 February 2025** | **06 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/016884** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-068170 A (TOYOTA MOTOR CORP.) 30 April 2020 (2020-04-30)<br>See abstract; and claim 1. | 1-20 |

Form PCT/ISA/210 (second sheet) (July 2022)

**INTERNATIONAL SEARCH REPORT**
Information on patent family members

International application No.

**PCT/KR2024/016884**

| Patent document cited in search report | | | Publication date (day/month/year) | Patent family member(s) | | | Publication date (day/month/year) |
|---|---|---|---|---|---|---|---|
| KR | 10-2023-0125553 | A | 29 August 2023 | CN | 117616611 | A | 27 February 2024 |
| | | | | EP | 4343909 | A1 | 27 March 2024 |
| | | | | JP | 2024-531303 | A | 29 August 2024 |
| | | | | US | 2024-0243342 | A1 | 18 July 2024 |
| | | | | WO | 2023-158266 | A1 | 24 August 2023 |
| JP | 2022-513762 | A | 09 February 2022 | CN | 114072951 | A | 18 February 2022 |
| | | | | JP | 7570697 | B2 | 22 October 2024 |
| | | | | US | 10403925 | B1 | 03 September 2019 |
| | | | | WO | 2020-123659 | A1 | 18 June 2020 |
| JP | 2003-086251 | A | 20 March 2003 | | None | | |
| JP | 2017-027911 | A | 02 February 2017 | JP | 6597021 | B2 | 30 October 2019 |
| JP | 2020-068170 | A | 30 April 2020 | JP | 7259263 | B2 | 18 April 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63546685
- US 63547809
- US 93082324
- US 93086224
- KR 1020240151089
- KR 1020190072289